# FASCICULE DE BREVET EUROPEEN

(11) **EP 3 559 086 B1**
(45) Date de publication et mention de la délivrance du brevet: **15.06.2022**
(21) Numéro de dépôt: 17832528.8
(22) Date de dépôt: 21.12.2017
(51) Int. Cl.: C08G 69/48, C08J 3/24, C08L 77/02, C08L 77/06, C08K 5/5419, C08J 3/20, B29C 67/00, B29C 64/153

(54) **POUDRE DE PARTICULES SPHERIQUES DE POLYAMIDE RETICULABLE, PROCEDE DE PREPARATION ET UTILISATION AVEC LA TECHNIQUE DE FRITTAGE PAR LASER SELECTIF**
PULVER AUS KUGELFÖRMIGEN VERNETZBAREN POLYAMIDPARTIKELN, HERSTELLUNGSVERFAHREN UND VERWENDUNG MIT EINER SELEKTIVEN LASERSINTERTECHNIK
POWDER OF SPHERICAL CROSSLINKABLE POLYAMIDE PARTICLES, PREPARATION PROCESS AND USE WITH THE SELECTIVE LASER SINTERING TECHNIQUE

(30) Priorité: 22.12.2016 FR 1663160
(43) Date de publication de la demande: 30.10.2019
(73) Titulaire: Setup Performance SAS, 38290 Frontonas (FR)
(72) Inventeur: GIMENEZ, Jerome, 69500 Bron (FR)
(74) Mandataire: Cabinet Beau de Loménie
(86) Numéro de dépôt international: PCT/FR2017/053776
(87) Numéro de publication internationale: WO 2018/115767

(56) Documents cités:
- JP-A- S62 240 355
- US-A1- 2013 307 196

## Description

La présente invention concerne une poudre de particules sphériques de polyamide réticulable adaptée à la technique de frittage par laser sélectif (SLS), ainsi qu'un procédé d'obtention d'une telle poudre de particules sphériques de polyamide réticulable. La présente invention concerne également la réalisation d'articles à partir de ladite poudre de particules sphériques de polyamide réticulable par SLS suivi d'une étape de réticulation.

La fabrication d'articles peut être réalisée grâce à une technique additive. L'article est réalisé strate après strate. Pour cela, en amont, grâce à un logiciel de conception par ordinateur (CAO), la structure tridimensionnelle de l'article à réaliser est découpée en tranches. L'objet virtuel en trois dimensions à réaliser est ainsi découpé en tranches bidimensionnelles de très fine épaisseur. Ces fines tranches vont alors être réalisées une à une, sous forme de strate, en effectuant la répétition de la séquence binaire suivante :
- la matière nécessaire à la réalisation de l'article souhaité est déposée sous la forme d'une poudre en un lit continu pour chaque strate, puis
- l'agglomération de chaque strate et la liaison des strates entre elles, sont réalisées localement selon un motif prédéfini par un apport d'énergie ou par projection d'un liquide en fines gouttelettes.

L'article est donc construit par superposition de strates élémentaires liées entre elles par un apport d'énergie ou par projection d'un liquide en fines gouttelettes. L'apport localisé d'énergie peut se faire avec un faisceau de lumière dirigé (LED ou LASER) ou un faisceau d'électrons dirigés ou encore avec toute source d'énergie autorisant sa focalisation et un balayage du lit de poudre selon le motif sélectionné par CAO. L'interaction énergie-matière conduit alors soit à un frittage, soit à une fusion/solidification de la matière, soit encore à une photo-polymérisation ou photo-réticulation de la matière, selon sa nature et celle de la source d'énergie utilisée.

Parmi les différentes techniques additives connues, on peut notamment citer le frittage par laser sélectif, dite SLS (Selective Laser Sintering, en anglais).

La technique de frittage par laser sélectif (prototypage rapide) pour produire des articles à partir de polymères pulvérulents est connue et décrite dans le brevet US 6,136,948 et la demande WO 96/06881.

Dans le cas de la technique SLS, une poudre de la matière destinée à constituer l'article est déposée pour former un lit continu. Un faisceau d'un laser puissant est alors appliqué localement selon le motif sélectionné et permet d'agglomérer la poudre pour former la strate correspondant à l'article souhaité, voire la lier à la strate précédente par frittage. Sous l'effet de l'apport d'énergie localisé, les grains de la poudre fusionnent partiellement et se soudent entre eux, ce qui donne sa cohésion à la strate. Un nouveau lit de poudre est ensuite étalé et le processus recommence.

De nombreux polymères sont a priori adaptés au procédé SLS: les polyacétals, le polypropylène, le polyéthylène, les ionomères, les polyamides... Les polyamides (notamment le PA 11 et le PA 12) sont aujourd'hui les matériaux les plus utilisés pour la production d'articles par SLS, en particulier pour la production de composants d'ingénierie. Les articles fabriqués à partir de la poudre de PA 12 répondent aux exigences élevées en ce qui concerne le chargement mécanique (résistance mécanique), et ont des propriétés proches de celles des pièces produites par des techniques de transformation habituelles utilisées en plasturgie, telles que l'extrusion ou le moulage par injection.

Deux des caractéristiques importantes pour qu'une poudre de matière plastique soit adaptée à la technique SLS sont les propriétés thermiques de la matière plastique et la granulométrie de la poudre (forme et taille des particules). Le PA 12 s'est révélé le polymère thermoplastique le plus utilisé pour le procédé SLS, car il présente des caractéristiques thermiques tout à fait adaptées. Le PA 12 est utilisé sous forme de poudre de particules sphériques permettant d'avoir un bon écoulement de la poudre et une densité par le lit de poudre déposé importante.

Le brevet US 6,245,281 renseigne les propriétés physico-chimiques optimales des poudres de PA 12 : point de fusion de 185-189 °C, enthalpie de fusion de 112 ± 17 J/g, point de cristallisation de 138-143 °C. Les particules de PA 12 décrites ont alors une taille de 50-150 microns.

Les poudres de particules sphériques de PA 12 peuvent être obtenues par dissolution/précipitation de PA 12, comme cela est décrit dans le brevet US 5,932,687 par exemple. Elles peuvent également être obtenues directement lors de la synthèse du polymère en suspension ou en solution, comme cela est décrit dans la demande de brevet WO 2006/051222. Une troisième technique permettant d'obtenir des particules sphériques est le procédé d'extrusion, tel que décrit dans la demande de brevet WO 2007/115977.

La technique la plus accessible pour l'homme de l'art pour obtenir de la poudre de polyamide est le broyage mécanique. Celui-ci présente néanmoins l'inconvénient de générer des particules non sphériques, de forme non contrôlée, pouvant altérer les propriétés d'écoulement et d'empilement de la poudre et qui ne sont donc pas adaptées pour une utilisation avec la technique SLS.

Le greffage de groupements alcoxysilane sur un polyamide est, par ailleurs, déjà connu. Ce greffage se fait en phase fondue (i.e. chauffage à une température supérieure à la température de fusion du polymère) et conduit à un polymère greffé qui n'est donc pas sous la forme d'une poudre et n'est donc, par conséquent, pas adapté pour une utilisation avec la technique SLS. Ainsi, la demande de brevet WO 1999/047584 décrit le greffage de trialcoxysilanes fonctionnalisés sur des copolyamides en phase fondue. Les polymères résultant sont utilisés en tant que colle thermofusible. On peut, également, citer la demande de brevet FR 2 535 729 qui décrit la préparation de polyamide réticulé par des groupements silane fonctionnalisés et le brevet US 5,804,681 qui décrit le greffage sur des polyamides, d'alcoxysilanes insaturés, afin d'améliorer les propriétés thermomécaniques.

Or, toute modification chimique d'un polymère à l'état fondu, et notamment par « greffage pendant » sur les chaînes macromoléculaires, est susceptible de modifier la structure cristalline et, par-là, les propriétés thermiques du polymère, à savoir ses températures de fusion, de cristallisation et les enthalpies.

Il existe, par ailleurs, des exemples de modification chimique de poudre de particules de polyamide en surface, qui, cependant, ne sont nullement adaptées à la technique SLS.

Par exemple, la demande EP 1 686 142 décrit le procédé de préparation de poudre de particules de polyamide greffé en surface par un monomère de greffage fonctionnalisé afin d'améliorer la compatibilité du polyamide avec les revêtements de surface. Le procédé comprend une étape de mélange des particules de polyamide avec un monomère de greffage, suivie d'une étape d'irradiation photonique ou électronique. Les particules obtenues sont alors greffées uniquement en surface et ont une taille non adaptée à la technique SLS (de 10 microns ± 2 microns dans les exemples).

Par ailleurs, le brevet GB 1 565 674 décrit la modification d'une poudre de polymère thermoplastique pour le rendre réticulable pour des applications de revêtement sur verre. Le procédé comprend une première étape d'imprégnation de l'agent de réticulation sur le polymère suivie d'une étape de greffage à l'état fondu.

Il existe donc un besoin de poudre de particules de polyamide présentant de bonnes propriétés d'écoulement et d'empilement, ainsi que de bonnes propriétés thermomécaniques permettant d'augmenter la gamme d'utilisation pour la technique SLS et d'éviter le fluage à chaud et sous charge.

La Demanderesse se propose de résoudre les inconvénients susmentionnés, en fournissant une poudre de particules de polyamide adaptée à la technique SLS, notamment en termes de taille et forme de particules sur et dans lesquelles sont greffées des groupements de réticulation. Plus précisément, la solution proposée par la Demanderesse concerne l'emploi d'une poudre de particules sphériques de polyamide (I) fonctionnalisé par des fonctions de réticulation Rt, choisies parmi les groupes alcoxysilane, chlorosilane et acyloxysilane, le rendant réticulable, lesdites fonctions de réticulation Rt étant présentes en surface et dans la masse desdites particules et lesdites particules de polyamide réticulable (I) ayant un diamètre moyen d50 appartenant à la gamme allant de 20 à 100 microns.

La réticulation offerte par la poudre selon l'invention permet d'améliorer les propriétés thermomécaniques du polymère (plus grande plage de température d'utilisation, résistance mécanique, allongement à la rupture, tenue thermique, flexibilité, et/ou résistance à la déformation à chaud), tandis que la forme et la taille des particules permettent un bon écoulement et une densité de poudre optimale, compatibles avec la technique SLS.

Avantageusement, la poudre de particules sphériques de polyamide réticulable (I) présente l'une ou l'autre des caractéristiques suivantes, ou une combinaison quelconque d'au moins deux des caractéristiques suivantes, voire de toutes les caractéristiques suivantes, lorsqu'elles ne s'excluent pas l'une l'autre :
- les diamètres moyens d10 et d90 desdites particules de polyamide réticulable (I) sont tels que (d90-d10) appartient à la gamme allant de 10 à 80 microns, de préférence de 20 à 60 microns ;
- le polyamide est choisi parmi le PA 6, le PA 6.6, le PA 11 et le PA 12 ;
- les fonctions de réticulation Rt sont des groupes alcoxysilane ;
- les fonctions de réticulation Rt sont introduites par greffage sur un polyamide (II) ;
- les fonctions de réticulation Rt sont apportées par greffage direct sur des fonctions amine et/ou carboxyle et/ou amide d'un polyamide (II), nommées fonctions réactives Rr, d'un agent de réticulation (III) de formule :

   Rg-R1-Si(R2)₃₋ₐ(R3)ₐ (III)

   dans laquelle :
   - a = 0, 1 ou 2,
   - Rg est une fonction de greffage apte à réagir avec Rr,
   - R1 est un groupe divalent hydrocarboné ou une liaison covalente reliant directement Si à Rg,
   - R2 est un groupe alcoxy ou acyle ou représente un halogène, les groupes R2 étant identiques ou différents quand a = 0 ou 1,
   - R3 est un groupe alkyle, les groupes R3 étant identiques ou différents quand a = 2 ;
      - la fonction de greffage Rg de l'agent de réticulation (III) comprend au moins un groupe choisi parmi :
         - le groupe amino -NH₂,
         - les groupes présentant une insaturation éthylénique, de préférence les groupes vinyle, allyle et méthacryloyle,
         - les groupes époxy, étant de préférence choisis parmi les groupes glycidyle, glycidoxy et oxiranyle,
         - le groupe thiol -SH,
         - les atomes d'halogène, de préférence de chlore,
         - le groupe isocyanate -N=C=O, et
         - le groupe acylurée -CO-NH-CO-NH₂ ou alkylurée -R-NH-CO-NH₂ avec R est un groupe divalent hydrocarboné ;
      - l'agent de réticulation (III) est tel que a = 0, R1 est un groupe hydrocarboné divalent, de préférence un groupe propylène, R2 est un groupe alcoxy, de préférence méthoxy ou éthoxy, et Rg est un groupe époxy, et de préférence un groupe glycidoxy ;
      - le polyamide réticulable (I) présente un taux de fonctions de réticulation Rt appartenant à la gamme allant de 0,3 à 9% en poids, de préférence de 1 à 5% en poids, par rapport au poids total du polyamide réticulable.

La Demanderesse propose par ailleurs un procédé de préparation d'une poudre de particules sphériques de polyamide réticulable adaptée à la technique SLS, et en particulier d'une poudre de particules sphériques de polyamide réticulable telle que définie dans le cadre de l'invention. Le procédé de préparation de poudre de particules sphériques de polyamide réticulable (I) comprend les étapes suivantes :
a) Disposer d'une poudre de particules sphériques d'un polyamide (II), lesdites particules ayant un diamètre moyen d50 appartenant à la gamme allant de 20 à 100 microns,
b) Disposer d'un agent de réticulation (III) comprenant, d'une part, au moins une fonction de réticulation Rt choisie parmi les groupes alcoxysilane, chlorosilane et acyloxysilane, et, d'autre part, au moins une fonction de greffage Rg apte à réagir sur les fonctions amine et/ou carboxyle et/ou amide du polyamide (II), nommées fonctions réactives Rr,
c) Mélanger la poudre de particules sphériques de polyamide (II) avec l'agent de réticulation (III) pour obtenir un mélange (II+III),
d) Chauffer le mélange (II+III) issu de l'étape c) à une température T1 appartenant à la gamme allant de la température de transition vitreuse du polyamide (II) Tg_{(II)} + 5°C à la température de transition vitreuse du polyamide (II) Tg_{(II)} + 70°C si Tg_{(II)} + 70°C ≤ Tcrist_{(II)} - 35 °C ou appartenant à la gamme allant de Tg_{(II)} + 5°C à la température de cristallisation du polyamide (II) Tcrist_{(II)} - 35 °C si Tg_{(II)} + 70°C > Tcrist_{(II)} - 35 °C, pour obtenir une poudre de particules sphériques de polyamide imprégnée d'agent de réticulation (IV),
e) Chauffer la poudre de polyamide imprégnée d'agent de réticulation (IV) à une température T2 supérieure à T1 et inférieure à la température de cristallisation Tcrist_{(II)} du polyamide (II), pour obtenir une poudre de polyamide réticulable (I).

Avantageusement, le greffage des fonctions de réticulation a lieu directement sur ladite poudre de particules de polyamide. Le procédé de préparation de la poudre de particules de polyamide proposé par la Demanderesse permet tout d'abord de conserver la forme et la granulométrie de la poudre de particules. Les propriétés d'écoulement, de coulabilité de la poudre de particules et d'empilement sont ainsi conservées et maitrisées. D'autre part, parce qu'elle est réalisée à l'état solide, et de préférence en dessous de la température de cristallisation du polymère, la modification chimique ne modifie pas la structure cristalline du polymère. La poudre de particules de polymère conserve donc des caractéristiques thermiques adaptées au procédé SLS conditionnées par le choix de la poudre de polyamide (II). Ainsi, le profil thermique des particules de polyamide réticulable selon l'invention est peu modifié par rapport aux particules de ce même polyamide non réticulable : faible variation des enthalpies de fusion et de cristallisation (moins de 10%) ainsi que des températures de fusion (onset et pic), et légère baisse des températures de cristallisation (offset et pic, maximum 5 °C), contribuant ainsi à élargir la fenêtre de frittage (i.e. l'écart entre la température de cristallisation offset et la température de fusion onset).

En particulier, il est possible de réaliser le procédé de préparation de la poudre de particules sphériques de polyamide réticulable (I) par mise en œuvre de l'une ou l'autre des caractéristiques suivantes, ou d'une combinaison quelconque d'au moins deux des caractéristiques suivantes, voire de toutes les caractéristiques suivantes, lorsqu'elles ne s'excluent pas l'une l'autre:
- l'agent de réticulation (III) est de formule suivante :

   Rg-R1-Si(R2)₃₋ₐ(R3)ₐ (III)

   dans laquelle :
   - a = 0, 1 ou 2,
   - Rg est une fonction de greffage apte à réagir avec les fonctions réactives Rr du polyamide (II),
   - R1 est un groupe divalent hydrocarboné ou une liaison covalente reliant directement Si à Rg,
   - R2 est un groupe alcoxy ou acyle ou un halogène, les groupes R2 étant identiques ou différents quand a = 0 ou 1,
   - R3 est un groupe alkyle, de préférence un groupe alkyle en C1-C6, les groupes R3 étant identiques ou différents quand a = 2 ;
      - le mélange à l'étape c) est effectué avec une quantité d'agent de réticulation (III) appartenant à la gamme allant de 1 à 10% en poids, de préférence de 3 à 8% en poids, et mieux encore de 4 à 6% en poids par rapport au poids total d'agent de réticulation (III) et de polyamide (II) ;
      - le chauffage à l'étape d) est réalisé à une température T1 appartenant à la gamme allant de Tg_{(II)} + 10 °C à Tcrist_{(II)} - 40 °C, et mieux encore de Tg_{(II)} + 20 °C à Tcrist_{(II)} - 45 °C, si Tg_{(II)} + 50°C > Tcrist_{(II)} - 35 °C ;
      - le chauffage à l'étape d) est réalisé à une température T1 appartenant à la gamme allant de Tg_{(II)} +10 °C à Tg_{(II)} + 70 °C, de préférence de Tg_{(II)} + 20 °C à Tg_{(II)} + 70 °C, si Tg_{(II)} + 70°C ≤ Tcrist_{(II)} - 35 °C ;
      - le chauffage à l'étape e) est réalisé à une température T2 supérieure ou égale à T1 + 10 °C et inférieure à Tcrist_{(II)}, de préférence de T1 + 20 °C à Tcrist_{(II)} - 5 °C, et mieux encore de T1 + 30 °C à Tcrist_{(II)} - 10 °C.

La présente invention concerne également une poudre de particules sphériques de polyamide réticulable (I) susceptible d'être obtenue par le procédé de préparation tel que décrit dans le cadre de l'invention.

La présente invention concerne encore l'utilisation d'une poudre de particules sphériques de polyamide réticulable (I) selon l'invention pour la préparation d'articles intermédiaires par la technique par frittage par laser sélectif.

La présente invention concerne aussi un procédé de préparation d'un article intermédiaire à partir d'une poudre de particules sphériques de polyamide (I) selon l'invention par la technique de frittage par laser sélectif, en particulier par formation de strates élémentaires superposées et liées successivement entre elles.

La présente invention concerne encore un procédé de préparation d'un article comprenant :
i. la formation d'un article intermédiaire par la technique de frittage par laser sélectif à partir d'une poudre de particules sphériques de polyamide réticulable (I), tel que décrit dans le cadre de l'invention, et
ii. la réticulation d'au moins une partie des fonctions réticulables Rt dudit polyamide réticulable (I).

La réticulation à l'étape ii) peut être réalisée par hydrolyse, et en particulier à l'air ambiant.

Enfin, la présente invention concerne un article formé à partir d'une poudre de particules sphériques de polyamide réticulable (I) tel que décrit dans le cadre de la présente invention et obtenu après réticulation d'au moins une partie des fonctions réticulables Rt dudit polyamide réticulable (I).

### Poudre de particules sphériques de polyamide réticulable (I)

La présente invention concerne un polyamide (I) fonctionnalisé par des fonctions de réticulation Rt le rendant réticulable.

Le polyamide réticulable (I) de la présente invention est sous forme de poudre de particules sphériques.

Par « particule sphérique », on entend une particule qui présente un indice de sphéricité, c'est-à-dire un rapport entre son plus grand diamètre et son plus petit diamètre, inférieur à 1,2.

Les particules de polyamide réticulable (I) de la présente invention ont un diamètre moyen d50 appartenant à la gamme allant de 20 à 100 microns, de préférence de 35 à 50 microns.

Selon un mode de réalisation, les particules de polyamide réticulable (I) de la présente invention ont un diamètre moyen d90 appartenant à la gamme allant de 45 à 80 microns, de préférence de 50 à 75 microns.

Selon un mode de réalisation, les particules de polyamide réticulable (I) ont un diamètre moyen d10 appartenant à la gamme allant de 10 à 35 microns, de préférence de 15 à 30 microns.

Par « diamètre moyen d10/d50/d90 de particules », on entend au sens de la présente invention le diamètre (des particules) pour lequel 10%/50%/90% en volume desdites particules ont un diamètre inférieur, tel que mesuré avec la technique de granulométrie laser en voie sèche appelée également granulométrie à diffraction Laser.

Avantageusement, les particules sphériques de polyamide réticulable (I) sont de taille homogène.

Par « de taille homogène », on entend au sens de la présente invention que la distribution de la taille des particules est étroite, et notamment que les diamètres moyens des particules sont tels que (d90-d10) appartient à la gamme allant de 10 à 80 microns, de préférence de 20 à 60 microns.

Selon un mode de réalisation, le polyamide réticulable (I) a une température de transition vitreuse Tg_{(I)} appartenant à la gamme allant de 30 à 90 °C, et de préférence de 40 à 60 °C.

La température de transition vitreuse d'une matière correspond à une température de changement de propriétés mécaniques à laquelle la matière passe d'un état vitreux (solide rigide) à un état caoutchoutique avec une plus grande capacité de déformation. Elle caractérise la phase amorphe d'un polymère. Dans le cas d'un polymère tel qu'un polyamide, c'est un phénomène lié à des mouvements de segments de chaînes macromoléculaires situées dans les domaines amorphes.

Dans le cadre de la présente invention, les températures de transition vitreuse sont mesurées par Analyse Calorimétrique Différentielle à Balayage (Differencial scanning calorimétrie, DSC en anglais).

Selon un mode de réalisation, le polyamide réticulable (I) a une température de fusion Tfus_{(I)} appartenant à la gamme allant de 170 à 220 °C, de préférence de 175 à 205 ° C.

La température de fusion correspond à la température mesurée au maximum du pic du phénomène thermique correspondant à la fusion (nommée Tfus pic). Dans le cadre de la présente invention, les températures de fusion sont mesurées par Analyse Calorimétrique Différentielle à Balayage (Differencial scanning calorimétrie, DSC en anglais). La valeur Onset fréquemment mesurée correspond au début du phénomène de fusion des cristallites et est une température extrapolée, correspondant à l'intersection de la ligne de base du pic et de la tangente au point de plus grande pente de la première partie du pic de fusion pour les températures inférieures à la température au maximum du pic.

Selon un mode de réalisation, le polyamide réticulable (I) a une température de cristallisation Tcrist_{(I)} appartenant à la gamme allant de 110 à 170 °C, de préférence de 145 à 165 °C.

La température de cristallisation correspond à la température mesurée au maximum du pic du phénomène thermique correspondant à la cristallisation (nommée Tcrist pic). La température de cristallisation peut être mesurée par Analyse Calorimétrique Différentielle à Balayage (Differencial scanning calorimétrie, DSC en anglais). La valeur Offset fréquemment mesurée correspond à la fin du phénomène de cristallisation des cristallites et est une température extrapolée, correspondant à l'intersection de la ligne de base du pic et de la tangente au point de plus grande pente de la deuxième partie du pic de cristallisation pour les températures supérieures à la température au maximum du pic.

Selon un mode de réalisation, l'enthalpie de fusion du polyamide (I) appartient à la gamme allant de -120 J/g à -80 J/g.

L'enthalpie de fusion (ΔHfus) correspond à l'énergie absorbée sous forme de chaleur par le polyamide lorsqu'il passe de l'état solide à l'état liquide.

Dans le cadre de la présente invention, les enthalpies de fusion sont mesurées par Analyse Calorimétrique Différentielle à Balayage (Differencial scanning calorimétrie, DSC en anglais), en particulier lors du premier balayage croissant de température, comme décrit dans les exemples qui vont suivre.

Le polyamide peut être un polyamide aliphatique ou semi-aromatique semi cristallin.

Selon un mode de réalisation, le polyamide est un polyamide aliphatique. Selon ce mode de réalisation, le polyamide est choisi parmi le PA 6 (polycaprolactame : [NH-(CH₂)₅-CO]ₙ), le PA 6.6 (polyhexaméthylène adipamide : [NH-(CH₂)₆-NH-CO-(CH₂)₄-CO]ₙ), le PA 6.9 (polyhexaméthylène nonanediamide : [NH-(CH₂)₆-NH-CO-(CH₂)₇-CO]ₙ),le PA 6.10 (polyhexaméthylène sebacamide : [NH-(CH₂)₆-NH-CO-(CH₂)₈-CO]ₙ), le PA 6.12 (polyhexaméthylène dodécanediamide : [NH-(CH₂)₆-NH-CO-(CH₂)₁₀-CO]ₙ), le PA 10.10 (polydécaméthylène sebacamide : [NH-(CH₂)10-NH-CO-(CH₂)₁₀-CO]ₙ), le PA 10.12 (polydécaméthylène dodécanediamide : [NH-(CH₂)10-NH-CO-(CH₂)₁₀-CO]ₙ), le PA 11 (Polyundécanamide : [NH-(CH₂)₁₀-CO]ₙ), le PA 12 (polylauryl lactame : [NH-(CH₂)₁₁-CO]ₙ).

Selon un mode de réalisation, le polyamide est un polyamide semi-aromatique semi cristallin. A titre d'exemple de polyamides semi-aromatiques semi cristallins convenant au sens de la présente invention, on peut citer le PA mXD.6 (Polymétaxylylène adipamide) et le PA mXD.10 (Polymétaxylylène sebacamide). Selon un mode particulier de réalisation, le polyamide (I) est le PA mXD.10.

Selon un mode de réalisation préféré de l'invention, le polyamide est un polyamide aliphatique, de préférence choisi parmi le PA 6, le PA 6.6, le PA 6.10, le PA10.10, le PA10.12, le PA 11 et le PA 12, et de préférence le PA 11 et le PA 12.

Le polyamide réticulable (I) de la présente invention comprend des fonctions de réticulation Rt présentes en surface et dans la masse desdites particules de polyamide.

Par « groupements présents en surface et dans la masse des particules », on entend que les groupements sont présents non seulement en surface des particules mais également à l'intérieur de ces particules, et en particulier à cœur.

Selon un mode de réalisation, le pourcentage de fonctions de réticulation Rt du polyamide réticulable (I) appartient avantageusement à une gamme allant de 0,3 à 9% en poids, de préférence de 1 à 5% en poids, par rapport au poids total du polyamide réticulable (I).

Selon un mode de réalisation, le polyamide réticulable (I) est réticulable en présence d'eau, notamment en présence d'eau présente dans l'air ambiant, par l'intermédiaire des fonctions de réticulation Rt qu'il comprend.

Selon un mode de réalisation, les fonctions de réticulation Rt sont réticulables à une température appartenant à une gamme allant de 20 à 100 °C, de préférence de 50 à 95 °C. C'est, en particulier, le cas des fonctions de réticulation Rt choisies parmi les groupes alcoxysilane et chlorosilane.

Selon un mode de réalisation, les fonctions de réticulation Rt sont apportées par greffage, de préférence par greffage direct, sur les fonctions amine et/ou acide et/ou amide d'un polyamide (II), nommées fonctions réactives Rr, d'un agent de réticulation (III) de formule :

Rg-R1-Si(R2)₃₋ₐ(R3)ₐ (III)

dans laquelle :
- a = 0, 1 ou 2,
- Rg est une fonction de greffage apte à réagir avec les fonctions réactives Rr,
- R1 est un groupe divalent hydrocarboné ou une liaison covalente reliant directement Si à Rg,
- R2 est un groupe alcoxy ou acyle ou un atome d'halogène, les groupes R2 étant identiques ou différents quand a = 0 ou 1,
- R3 est un groupe alkyle, de préférence un groupe alkyle en C1-C6, les groupes R3 étant identiques ou différents quand a = 2.

Par « fonction amine du polyamide », on entend une amine primaire, i.e. un groupe -NH₂. Selon un mode de réalisation, le polyamide comprend une fonction amine primaire en fin de chaîne du polyamide.

Par « fonction carboxyle du polyamide » ou « fonction acide du polyamide », on entend au sens de la présente invention un groupement acide carboxylique, i.e. un groupe -COOH. Selon un mode de réalisation, le polyamide comprend une fonction acide en fin de chaîne du polyamide.

Par « fonction amide du polyamide », on entend au sens de la présente invention les fonctions amides secondaires des chaînes du polyamide.

Par « groupe divalent hydrocarboné », on entend au sens de la présente invention un groupe alkyle divalent, de préférence un groupe (C1-C20)alkyle divalent, de préférence (C1-C10)alkyle divalent, et mieux encore un groupe (C2-C5)alkyle divalent.

Par « alcoxy », on entend au sens de la présente invention un groupe -O(C1-C10)alkyle, de préférence -O(C1-C6)alkyle, et mieux encore -O(C1-C3)alkyle. A titre d'exemple de groupements alcoxy convenant au sens de la présente invention, on peut citer les groupes méthoxy, éthoxy, propyloxy, *iso*-propyloxy, butyloxy, *iso-*butyloxy, sec-butyloxy, *tert*-butyloxy, pentyloxy, hexyloxy. De manière préférée, un groupe alcoxy de la présente invention est un groupe méthoxy ou un groupe éthoxy.

Par « alkyle », on entend un groupe alkyle linéaire ou ramifié, acyclique. A titre d'exemple de groupes alkyle convenant au sens de la présente invention, on peut citer les groupes méthyle, éthyle, propyle, *iso*-propyle, butyle, *iso*-butyle, *sec-*butyle, *tert-butyle,* pentyle, *iso*-pentyle, sec-pentyle, *neo*-pentyle, hexyle, heptyle, octyle, nonyle, et decyle.

Par « acyle », on entend au sens de la présente invention un groupe - C(=O)(C1-C10)alkyle, de préférence de -C(=O)(C1-C6)alkyle. A titre d'exemple de groupes acyle convenant au sens de la présente invention, on peut citer notamment les groupes formyle, acétyle, et propionyle.

Par « atome d'halogène », on entend un atome de fluor, de chlore, de brome ou d'iode, de préférence un atome de chlore.

Les fonctions de réticulation Rt sont choisies parmi les groupes alcoxysilane, chlorosilane et acyloxysilane, de préférence alcoxysilane.

Selon un mode de réalisation, la fonction de greffage Rg de l'agent de réticulation (III) comprend au moins un groupe choisi parmi :
- le groupe amino -NH₂,
- les groupes comprenant une insaturation éthylénique, de préférence les groupes vinyle, allyle et méthacryloyle,
- les groupes époxy, étant de préférence choisis parmi les groupes glycidyle, glycidoxy, oxiranyle,
- le groupe thiol -SH,
- les atomes d'halogène, de préférence de chlore,
- le groupe isocyanate -N=C=O, et
- le groupe acylurée -CO-NH-CO-NH₂ ou alkylurée -R-NH-CO-NH₂ avec R qui est un groupe divalent hydrocarboné.

Par « insaturation éthylénique », on entend une double liaison carbone - carbone. A titre d'exemple de groupes comprenant une/des insaturations éthyléniques convenant dans la présente invention, on peut citer les groupes vinyle, allyle, méthacryloyle.

Par « groupe époxy », on entend un groupe comprenant un éther cyclique à 3 chainons, appelé également oxacyclopropane. A titre d'exemple de groupes époxy, on peut notamment citer les groupes glycidyle, glycidoxy et oxiranyle.

Selon un mode de réalisation, la fonction de greffage Rg de l'agent de réticulation (III) comprend au moins un groupe choisi parmi les groupes époxy et les atomes d'halogène. Selon un mode de réalisation particulier de l'invention, Rg est un groupe époxy, de préférence glycidoxy. Selon un autre mode de réalisation particulier, Rg représente un atome d'halogène, de préférence de chlore.

Selon un mode de réalisation, l'agent de réticulation (III) est tel que a = 0.

Selon un mode de réalisation, l'agent de réticulation (III) est tel que a = 0 ou 1, et les groupements R2 sont tous identiques.

Selon un mode de réalisation, l'agent de réticulation (III) est tel que a = 2, et les groupements R3 sont tous identiques.

De préférence, R1 est un groupe divalent hydrocarboné, de préférence choisi parmi les groupes éthylène, propylène et butylène, de préférence propylène.

Selon un mode de réalisation, Rg représente un groupe époxy, de préférence glycidoxy, et R1 représente un groupe divalent hydrocarboné, de préférence propylène.

De préférence, tous les groupes R2, de préférence identiques, sont des groupes alcoxy, de préférence des groupes -OMe ou -OEt. Dans un mode de réalisation particulier de l'invention, tous les groupes R2 sont identiques et représentent -OMe ou -OEt.

De préférence, R3 est un groupe méthyle.

Dans un mode de réalisation particulier, a = 0, R1 est un groupe hydrocarboné divalent, de préférence un groupe propylène, R2 est un groupe alcoxy, de préférence méthoxy ou éthoxy, et Rg est un groupe époxy, de préférence un groupe glycidoxy.

Selon un autre mode de réalisation particulier de l'invention, a = 0, R1 est une liaison covalente, R2 est un groupe alcoxy, de préférence méthoxy ou éthoxy, et Rg est un atome d'halogène, et de préférence de chlore.

Selon un autre mode de réalisation particulier de l'invention, a = 1, R1 est une liaison covalente, R2 est un groupe alcoxy, de préférence méthoxy ou éthoxy, R3 est un groupe alkyle, de préférence méthyle, et Rg est un atome d'halogène, et de préférence de chlore.

A titre d'exemples d'agents de réticulation pouvant convenir dans la présente invention, on peut citer le glycidoxypropyl triméthoxysilane, le glycidoxypropyl triéthoxysilane, l'aminopropyl triméthoxysilane, l'aminopropyl triéthoxysilane le γ-isocyanatopropyl triméthoxysilane, le vinyl triméthoxysilane, le vinyl triéthoxysilane, l'allyl triméthoxysilane, le vinyl triacétoxysilane, le vinyl tris-(2-méthoxyéthoxy)silane, le chloro triméthoxysilane, le chloro triéthoxysilane, le chlorométhyl (méthyl)diéthoxysilane et le chlorométhyl (méthyl)diméthoxysilane.

### Procédé de préparation de la poudre de particules sphériques de polyamide réticulable (I)

La présente invention concerne également un procédé de préparation d'une poudre de particules sphériques de polyamide réticulable (I) telle que définie dans le cadre de l'invention.

Ce procédé de préparation comprend les étapes suivantes :
a) Disposer d'une poudre de particules sphériques de polyamide (II), lesdites particules ayant un diamètre moyen d50 appartenant à la gamme allant de 20 à 100 microns,
b) Disposer d'un agent de réticulation (III) comprenant, d'une part, au moins une fonction de réticulation Rt choisie parmi les groupes alcoxysilane, chlorosilane et acyloxysilane, et, d'autre part, au moins une fonction de greffage Rg apte à réagir sur les fonctions amine et/ou carboxyle et/ou amide du polyamide (II), nommées fonctions réactives Rr,
c) Mélanger la poudre de particules sphériques de polyamide (II) avec l'agent de réticulation (III) pour obtenir un mélange (II+III),
d) Chauffer le mélange (II+III) issu de l'étape c) à une température T1 appartenant à la gamme allant de la température de transition vitreuse du polyamide (II) Tg_{(II)} + 5°C à la température de transition vitreuse du polyamide (II) Tg_{(II)} + 70°C ou à la température de cristallisation du polyamide (II) Tcrist_{(II)} - 35 °C si Tg_{(II)} + 70°C > Tcrist_{(II)} - 35 °C, pour obtenir une poudre de particules sphériques de polyamide imprégnée d'agent de réticulation (IV),
e) Chauffer la poudre de polyamide imprégnée d'agent de réticulation (IV) à une température T2 supérieure à T1 et inférieure à la température de cristallisation Tcrist_{(II)} du polyamide (II), pour obtenir une poudre de polyamide réticulable (I).

Avantageusement, le procédé de préparation permet d'obtenir une poudre de particules sphériques de polyamide réticulable (I) avec des fonctions réticulables présentes en surface et dans la masse des particules.

De manière avantageuse, la poudre de particules de polyamide réticulable (I) obtenue est sèche.

Selon un mode de réalisation, le polyamide (II) de départ a une température de transition vitreuse Tg_{(II)} appartenant à la gamme allant de 30°C à 90°C, de préférence de 40 °C à 60 °C.

Selon un mode de réalisation, le polyamide (II) de départ a une température de fusion Tfus_{(II)} appartenant à la gamme allant de 170 à 220 °C, de préférence 175 à 205 °C.

Selon un mode de réalisation, le polyamide (II) de départ a une température de cristallisation Tcrist_{(II)} appartenant à la gamme allant de 110 à 170 °C, de préférence 145 à 165 °C.

Selon un mode de réalisation, l'enthalpie de fusion du polyamide (I) appartient à la gamme allant de -120 J/g à -80 J/g.

Selon un mode de réalisation, le polyamide (II) est sous forme de particules sphériques de diamètre moyen d50 appartenant à la gamme allant de 20 à 100 microns, de préférence de 35 à 50 microns.

Le polyamide (II) est aliphatique ou semi-aromatique semi cristallin.

Selon un mode de réalisation, le polyamide (II) est un polyamide aliphatique. Selon ce mode de réalisation, le polyamide (II) est choisi parmi le PA 6 (polycaprolactame : [NH-(CH₂)₅-CO]ₙ), le PA 6.6 (polyhexaméthylène adipamide : [NH-(CH₂)₆-NH-CO-(CH₂)₄-CO]ₙ), le PA 6.9 (polyhexaméthylène nonanediamide : [NH-(CH₂)₆-NH-CO-(CH₂)₇-CO]ₙ),le PA 6.10 (polyhexaméthylène sebacamide : [NH-(CH₂)₆-NH-CO-(CH₂)₈-CO]ₙ), le PA6.12 (polyhexaméthylène dodécanediamide : [NH-(CH₂)₆-NH-CO-(CH₂)₁₀-CO]ₙ), le PA 10.10 (polydécaméthylène sebacamide : [NH-(CH₂)₁₀-NH-CO-(CH₂)₁₀-CO]ₙ), le PA 10.12 (polydécaméthylène dodécanediamide : [NH-(CH₂)₁₀-NH-CO-(CH₂)₁₀-CO]ₙ), le PA 11 (Polyundécanamide : [NH-(CH₂)₁₀-CO]ₙ), le PA 12 (polylauryl lactame : [NH-(CH₂)₁₁-CO]ₙ).

Selon un mode de réalisation, le polyamide (II) est un polyamide semi-aromatique semi cristallin. A titre d'exemple de polyamides semi-aromatiques semi cristallins convenant au sens de la présente invention, on peut citer le PA mXD.6 (Polymétaxylylène adipamide) et le PA mXD.10 (Polymétaxylylène sebacamide). Selon un mode de réalisation particulier, le polyamide (II) est le PA mXD.10.

Selon un mode de réalisation préféré de l'invention, le polyamide (II) est un polyamide aliphatique, de préférence choisi parmi le PA 6, le PA 6.6, le PA 6.10, le PA10.10, le PA10.12, le PA 11 et le PA 12, et de préférence le PA 11 et le PA 12.

Selon un premier mode de réalisation, les fonctions de réticulation Rt sont introduites lors de la synthèse du polyamide (II).

Selon un autre mode de réalisation, les fonctions de réticulation Rt sont apportées par greffage direct sur le polyamide (II). Pour cela, le polyamide (II) est porteur de fonctions réactives sur lesquelles vont réagir un agent de réticulation. Selon ce mode de réalisation, les fonctions de réticulation Rt sont apportées par greffage direct sur les fonctions amine et/ou carboxyle et/ou amide du polyamide (II), nommées fonctions réactives Rr, d'un agent de réticulation (III). En d'autres termes, le polyamide réticulable (I) est caractérisé en ce que, lors de son obtention, les fonctions Rg des agents de réticulation (III) réagissent avec les fonctions réactives Rr du polyamide (II) pour conduire au greffage des fonctions de réticulation Rt.

Avantageusement, l'agent de réticulation (III) est tel que précédemment défini.

Des polyamides de départ (II) et des agents de réticulation (III) sont disponibles dans le commerce, notamment auprès des sociétés Arkema et Momentive Performance Materials Inc respectivement.

De manière avantageuse selon l'invention, le polyamide réticulable (I) ne diffère du polyamide (II) de départ que par la présence de fonctions réticulables.

Selon un mode de réalisation, le mélange à l'étape c) est effectué avec une quantité d'agent de réticulation (III) appartenant à la gamme allant de 1 à 10% en poids, de préférence de 3 à 8% en poids, et mieux encore de 4 à 6% en poids, par rapport au poids total d'agent de réticulation (III) et de polyamide (II).

Avantageusement, le taux de fonctions de réticulation présentes dans l'agent de réticulation (III) représente 30 à 90% en poids de l'agent de réticulation (III). Ainsi, lorsque 1 à 10% en poids d'agent de réticulation (III) sont employés pour préparer le polyamide réticulable (I), celui-ci a avantageusement un taux de fonctions de réticulation Rt appartenant à la gamme allant de 0,3 à 9% en poids, et de préférence de 1 à 5% en poids, par rapport au poids total du polyamide réticulable (I).

Avantageusement, le taux de greffage appartient à la gamme de 50 à 100%, de préférence de 60 à 100% et mieux encore de 70 à 100%. Le taux de greffage est ici le rendement de l'étape de greffage.

Selon un mode de réalisation, le mélange à l'étape c) est effectué à une température appartenant à la gamme allant de 20 à 30 °C.

Selon un mode de réalisation, le mélange à l'étape c) est effectué à sec, sans solvant, notamment dans un container ou mélangeur étanche, en atmosphère inerte ou non.

Selon un mode de réalisation, si Tg_{(II)} + 70°C > Tcrist_{(II)} - 35 °C , le chauffage à l'étape d) est réalisé à une température T1 appartenant à la gamme allant de Tg_{(II)} + 5 °C à Tcrist_{(II)} - 35 °C, de préférence de Tg_{(II)} + 10 °C à Tcrist_{(II)} - 40 °C, et mieux encore de Tg_{(II)} + 20 °C à Tcrist (II) - 45 °C.

Selon un mode de réalisation, si Tg_{(II)} + 70°C ≤ Tcrist_{(II)} - 35 °C, le chauffage à l'étape d) est réalisé à une température T1 appartenant à la gamme allant de Tg_{(II)} + 5 °C à Tg_{(II)} + 70 °C, de préférence Tg_{(II)} + 10 °C à Tg_{(II)} + 70 °C, de préférence de Tg_{(II)} + 20 °C à Tg_{(II)} + 70 °C.

Selon un mode de réalisation, l'étape de chauffage d) est réalisée en container étanche, agité ou non, de préférence sous atmosphère inerte, en particulier d'azote ou d'argon.

Selon un mode de réalisation, le chauffage à l'étape e) est réalisé à une température T2 supérieure ou égale à T1 + 10 °C et inférieure à Tcrist_{(II)}, de préférence de T1 + 20 °C à Tcrist_{(II)} - 5 °C, et mieux encore de T1 + 30 °C à Tcrist_{(II)} - 10 °C.

En général, le chauffage à la température T1 de l'étape d) sera maintenu pendant une durée de 1 à 4 heures et le chauffage à la température T2 de l'étape e) sera maintenu pendant une durée de 3 à 12 heures.

Selon un mode de réalisation particulier de l'invention, le procédé de préparation comprend une étape f), subséquente à l'étape e), d'ajout d'un agent d'écoulement, de préférence choisi parmi les silices ou les silices pyrogénées, d'une charge renforçante, de préférence choisie parmi les billes de verres pleines ou creuses, les fibres de carbones, les fibres de wollastonite ou les alumines, d'un agent ignifugeant, d'un stabilisant thermique, d'un agent antistatique ou conducteur, d'un agent colorant.

### Utilisation d'une poudre de particules sphériques de polyamide réticulable (I)

### - Formation d'un article intermédiaire avec la technique SLS

La présente invention concerne également l'utilisation d'une poudre de particules sphériques de polyamide réticulable (I) tel que défini dans le cadre de l'invention pour la préparation d'articles, nommés articles intermédiaires, par la technique de frittage par laser sélectif (SLS). La présente invention concerne également un procédé de préparation d'articles, nommés articles intermédiaires, par la technique de frittage par laser sélectif (SLS) à partir d'une poudre de particules sphériques de polymère réticulable (I) de la présente invention.

La forme tridimensionnelle de l'article, nommé article intermédiaire, est alors réalisée par la technique SLS, i.e. par formation de strates élémentaires superposées et liées successivement entre elles par répétition des étapes suivantes :
a) dépôt d'un lit continu de poudre comprenant, voire constitué exclusivement, d'une poudre de particules sphériques de polyamide réticulable (I) tel que défini dans le cadre de l'invention,
b) consolidation localisée par application d'un faisceau laser, selon un motif déterminé pour chaque strate, d'une partie de la poudre de particules sphériques de polyamide réticulable (I) déposée pour créer la strate élémentaire, et liaison simultanée de la strate élémentaire ainsi formée à la strate précédente, de manière à faire croitre progressivement la forme tridimensionnelle souhaitée de l'article intermédiaire.

De manière avantageuse, le lit continu de poudre à l'étape a) est d'épaisseur constante et s'étend selon une surface supérieure à la section de l'article intermédiaire souhaitée, prise au niveau de la strate, ce pour garantir la précision aux extrémités de l'article. L'épaisseur du lit de poudre appartient avantageusement à la gamme allant de 40 µm à 120 µm.

La consolidation à l'étape b) est réalisée par traitement laser.

Pour ce faire, on peut notamment utiliser toute machine d'impression SLS connue de l'homme de l'art, comme par exemple une imprimante 3D de type SnowWhite de la société Sharebot, de type Vanguard HS de la société 3D Systems ou de type P396 de la société EOS.

Lorsqu'une imprimante de type SnowWhite est utilisée, la puissance du laser appartient avantageusement à la gamme allant de 4 à 8 W.

La vitesse de déplacement du laser appartient avantageusement à la gamme allant de 0,2 à 2,5 m/s, de préférence de 0,8 à 2 m/s.

Les paramètres de la machine d'impression SLS sont choisis de manière à ce que la température à la surface du lit de poudre appartienne à la fenêtre de frittage, i.e. soit comprise entre la température de cristallisation offset et la température de fusion onset, et de préférence appartienne à la gamme allant de Tcrist_{(I)} offset + 10°C à Tfus_{(I)} onset -5 °C.

De manière avantageuse, la poudre de particules de polyamide réticulable (I) ne réticule pas lors du passage du laser et les pièces obtenues sont toujours thermoplastiques.

Une fois la structure tridimensionnelle de l'article intermédiaire formée, la matière non consolidée est ensuite éliminée.

De manière avantageuse, la poudre de particules de polyamide réticulable (I) utilisée, mais qui n'a pas subi l'impact du laser, ne s'est pas agglomérée sous l'action de la chaleur et n'a pas subi une quelconque modification, et peut de manière particulièrement avantageuse être utilisée à nouveau pour la préparation d'articles par SLS, et notamment au moins 5 fois.

### - Formation d'un article par réticulation d'un article intermédiaire

La présente invention concerne encore un article formé par une première étape de frittage par laser sélectif (SLS) d'une poudre de particules sphériques de polyamide réticulable (I), tel que défini dans le cadre de l'invention, suivi d'une étape de réticulation des fonctions de réticulation dudit polyamide réticulable (I).

La présente invention concerne la préparation d'un article en polyamide comprenant :
i. la formation d'un article intermédiaire par la technique de frittage par laser sélectif à partir d'une poudre de particules sphériques de polyamide réticulable (I) tel que défini dans le cadre de l'invention, et notamment selon le procédé décrit dans le cadre de l'invention,
ii. la réticulation d'au moins une partie des fonctions réticulables Rt dudit polyamide réticulable de l'article intermédiaire.

Selon un mode de réalisation, la réticulation à l'étape ii) se fait en présence d'eau, de préférence par reprise d'humidité à l'air libre ou en atmosphère contrôlée, par exemple à 40°C avec un taux d'humidité relative de 80%, ou par immersion dans l'eau.

Selon un mode particulier de réalisation, la réticulation à l'étape ii) se fait par immersion dans l'eau de l'article intermédiaire, de préférence à une température appartenant à la gamme allant de 20 à 100 °C, de préférence de 50 à 95 °C pendant 1 à 24h, de préférence 6 à 18h et mieux encore 9 à 15h.

Selon un mode de réalisation, le taux de réticulation appartient à la gamme allant de 70 à 100%, de préférence 100%.

Le taux de réticulation s'entend au sens de la présente invention comme le taux de fonctions réticulables au sein du polyamide réticulable ayant réticulé. Ce taux est exprimé en pourcentage massique par rapport à la masse initiale des fonctions de réticulation.

Selon un mode de réalisation, le procédé de préparation d'un article en polyamide susmentionné comprend en outre une étape iii), subséquente à l'étape ii), de séchage de l'article ainsi formé. De préférence, cette étape de séchage est réalisée à une température appartenant à la gamme allant de 20 à 100 °C, de préférence de 50 à 95 °C, notamment pendant 1 à 12h, de préférence 3 à 6h.

La présente invention va être à présent illustrée par les exemples suivants, qui sont donnés à titre purement illustratif sans pour autant en limiter la portée. Les exemples font référence aux figures annexées.

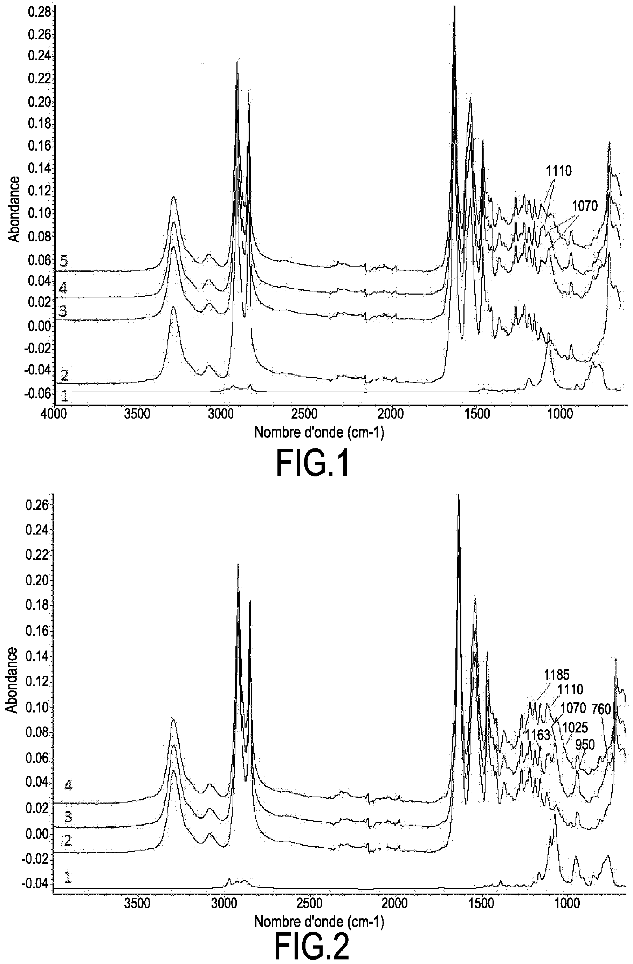

La **figure 1** représente les spectres IR de l'exemple 1, avec :
- 1 : glycidoxypropyl triméthoxy silane (Silquest A 187 commercialisé par la société Momentive Performance Materials Inc),
- 2 : PA 12 (Orgasol invent smooth commercialisé par la société Arkema),
- 3 : mélange de 95% de PA 12 (Orgasol invent smooth commercialisé par la société Arkema) + 5% de glycidoxypropyl triméthoxy silane (Silquest A 187 commercialisé par la société Momentive Performance Materials Inc),
- 4 : PA 12 (Orgasol invent smooth commercialisé par la société Arkema) imprégné de glycidoxypropyl triméthoxy silane (Silquest A 187 commercialisé par la société Momentive Performance Materials Inc) après la phase d'imprégnation à 80 °C, et
- 5 : PA 12 greffé avec 5% de glycidoxypropyl triméthoxy silane.

La **figure 2** représente les spectres IR de l'exemple 2, avec :
- 1 : glycidoxypropyl triéthoxy silane (Silquest A1871 commercialisé par la société Momentive Performance Materials Inc),
- 2 : PA 12 (Orgasol invent smooth commercialisé par la société Arkema),
- 3 : mélange de 95% PA 12 (Orgasol invent smooth commercialisé par la société Arkema) + de 5% de glycidoxypropyl triéthoxy silane (Silquest A1871 commercialisé par la société Momentive Performance Materials Inc), et
- 4 : PA 12 greffé avec 5% de glycidoxypropyl triéthoxy silane.

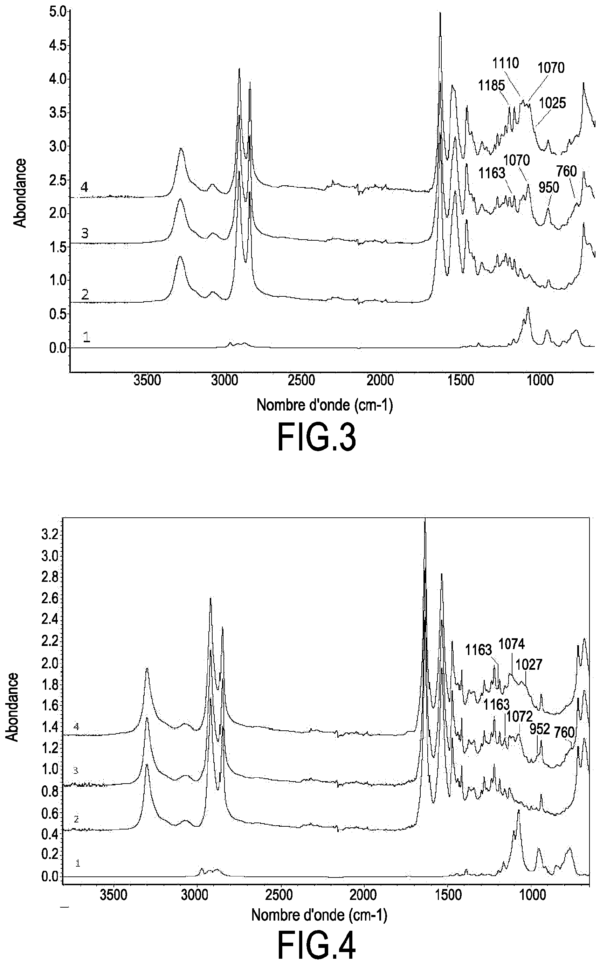

La **figure 3** représente les spectres IR de l'exemple 3, avec :
- 1 : glycidoxypropyl triéthoxy silane (Silquest A1871 commercialisé par la société Momentive Performance Materials Inc),
- 2 : PA 12 (Orgasol invent smooth commercialisé par la société Arkema),
- 3 : mélange de 92% PA 12 (Orgasol invent smooth commercialisé par la société Arkema) + de 8% de glycidoxypropyl triéthoxy silane (Silquest A1871 commercialisé par la société Momentive Performance Materials Inc), et
- 4 : PA 12 greffé avec 8% de glycidoxypropyl triéthoxy silane.

La **figure 4** représente les spectres IR de l'exemple 4, avec :
- 1 : glycidoxypropyl triéthoxy silane (Silquest A1871 commercialisé par la société Momentive Performance Materials Inc),
- 2 : PA 11 (Rilsan Invent Natural commercialisé par la société Arkema),
- 3 : mélange de 94% PA 11 (Rilsan Invent Natural commercialisé par la société Arkema) + de 6% de glycidoxypropyl triéthoxy silane (Silquest A1871 commercialisé par la société Momentive Performance Materials Inc), et
- 4 : PA 11 greffé avec 6% de glycidoxypropyl triéthoxy silane.

La **figure 5** représente les courbes de variation du module élastique et du facteur de perte ou d'amortissement, correspondant à la tangente de l'angle de perte Delta (Tan Delta), des exemples 5 et 6 comparées à celle du PA 12 de référence et de l'exemple comparatif, avec :
- courbe 1 : PA 12 (Orgasol invent smooth commercialisé par la société Arkema),
- courbe 2 : exemple 5,
- courbe 3 : exemple 6, et
- courbe 4 : exemple comparatif.

La **figure 6** représente les courbes de variation du module élastique et du facteur de perte ou d'amortissement, correspondant à la tangente de l'angle de perte Delta (Tan Delta) de l'exemple 7 comparées à celle du PA 11 de référence, avec :
- courbe 1 : PA 11 (Rilsan Invent Natural d'Arkema), et
- courbe 2 : exemple 7.

La **figure 7** représente les images de microscopie optique du PA12, PA11, des polymères des exemples 1 à 4 et celui de l'exemple comparatif.

### EXEMPLES

### Matériels et méthodes

**Analyse DSC :** Les analyses thermiques différentielles à balayage (DSC) sont réalisées avec un appareil DSC Q20 de TA instruments. Le cycle thermique appliqué est le suivant : 1^{ière} rampe croissante de température de l'ambiante à 240°C à 10°C/min, rampe décroissante de température de 240°C à -20°C à 10°C/min, 2^{ième} rampe croissante de température de -20°C à 240°C à 10°C/min.

**Granulométrie et forme des particules** : La granulométrie des poudres de particules de polymère est mesurée par granulométrie laser en voie sèche à l'aide d'un Granulomètre Malvern Instruments Mastersizer 2000. La forme des particules est observée par microscopie optique à l'aide d'un microscope USB de bureau Andonstar.

**Thermoplasticité** : La thermoplasticité des polymères est validée par la réalisation d'un film fin par thermocompression avec une presse hydraulique thermo régulée (40 g de poudre déposés entre les plateaux de la presse chauffée à 220°C , pressés à 10 bars pendant un temps de maintien de 2 minutes).

**Préparation d'une poudre de particules sphériques de polyamide réticulable selon l'invention** : De la poudre de polyamide (II) (1kg) est mélangée à sec avec de l'agent de réticulation (III) jusqu'à obtention d'une pâte collante qui ne s'écoule pas. Le mélange (II+III) est alors introduit dans un container étanche en acier inoxydable qui est ensuite placé dans une étuve programmable. Le cycle thermique appliqué est le suivant : isotherme à 80°C pendant 3 heures afin de réaliser l'imprégnation de la poudre, suivie d'une isotherme à 130°C pendant 8 heures afin de réaliser le greffage.

**Analyse infra rouge** : La spectroscopie infra rouge est réalisée en réflexion avec un spectromètre Nicolet IS10 équipé d'une cellule Smart ITR.

**Analyse thermo gravimétrique (ATG)** : L'analyse ATG est réalisée sous atmosphère inerte (azote) en appliquant une rampe croissante de température de 10°C/min jusqu'à 650°C avec un appareil TGA Q500 de TA instruments.

### Exemple 1: préparation d'une poudre de particules sphériques de polyamide réticulable de type PA 12 greffées avec 5% p/p de glycidoxypropyl triméthoxysilane

Une poudre de PA 12 adaptée au frittage laser (Orgasol invent smooth commercialisé par la société Arkema) (D50 = 38 µm, grain sphérique, température de fusion égale à 182°C, température de transition vitreuse égale à 40°C) est modifiée suivant l'invention. L'agent de greffage est le glycidoxypropyl triméthoxy silane (Silquest A 187 commercialisé par la société Momentive Performance Materials Inc) à un taux de 5% p/p. Un container de polyamide réticulable selon l'invention est préparé selon le procédé décrit dans la partie « matériels et méthode ».

Un autre container de poudre de particules de PA 12 (Orgasol smooth invent commercialisé par la société Arkema), imprégnée par 5% p/p de Glycidoxypropyl trimethoxy silane (Silquest A 187 commercialisé par la société Momentive Performance Materials Inc), est également préparé de la même manière mais retiré de l'étuve après la phase d'imprégnation à 80°C avant la phase de greffage.

Après refroidissement, la poudre de particules de polyamide réticulable obtenue est sèche et retrouve des propriétés d'écoulement proche du PA 12 non modifié (Orgasol invent smooth commercialisé par la société Arkema).

Pour vérifier le greffage du glycidoxypropyl triméthoxy silane, une analyse par spectroscopie infra rouge et une analyse thermo gravimétrique (ATG) ont été réalisées (i) sur la poudre de particules de polyamide réticulable et (ii) sur la poudre de particules de PA 12 non greffé et imprégné de glycidoxypropyl triméthoxy silane.

L'analyse infra rouge montre que le pic d'absorbance à 760 cm⁻¹ caractéristique de la fonction époxyde du silane, présent dans le mélange initial et dans l'échantillon prélevé en fin de phase d'imprégnation (cf. figure 1, courbes 3 et 4), a disparu après la phase de greffage (cf. figure 1, courbe 5). Ces fonctions époxydes sont consommées par la réaction de greffage.

Le pic d'absorbance à 1072 cm⁻¹, caractéristique des liaisons -O-CH-, est déplacé à 1110 cm⁻¹ (cf. figure 1).

Pour la poudre prélevée à la fin de la phase d'imprégnation, les deux pics coexistent : le greffage a déjà commencé lors de la phase d'imprégnation. L'analyse ATG donne un taux de volatile de l'ordre de 4 - 4,5%.

Pour la poudre de particules de polyamide prélevée à la fin de la phase de greffage, le pic à 1070 cm⁻¹ a disparu. Le taux de volatile mesuré par ATG est inférieur à 0,2%, ce qui indique que le greffage est quasiment complet.

Le profil thermique de la poudre de particules de polyamide réticulable est déterminé par analyse DSC. Les résultats prouvent que le profil thermique de la poudre de PA 12 n'est pas modifié par le greffage (cf. tableau 1).

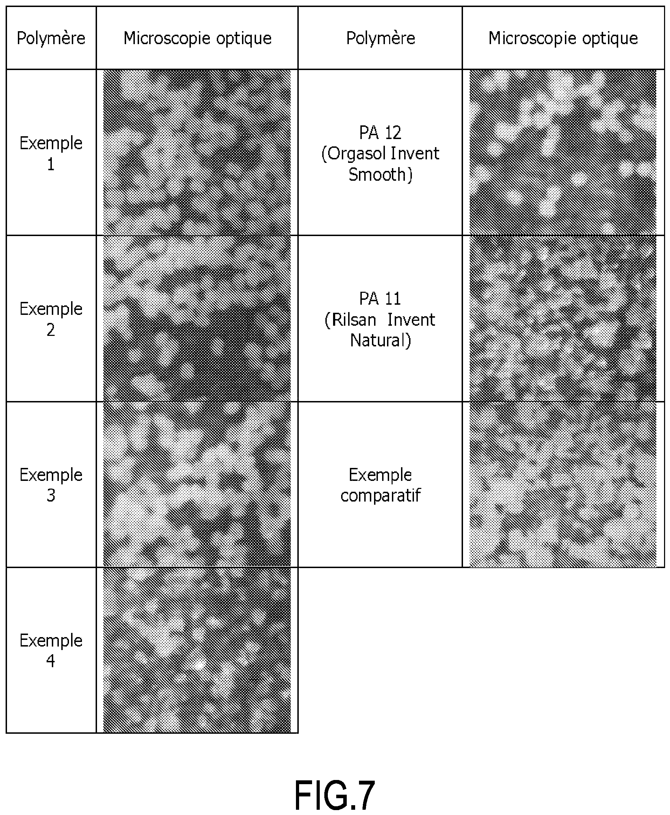

La granulométrie de la poudre obtenue n'est quasiment pas modifiée (cf. tableau 2 et figure 7). La forme sphérique des particules est conservée. La taille des particules reste homogène : la valeur (d90-d10) est de 26 µm, et est comparable à celle du PA12 (23 µm).

La thermoplasticité de la poudre de PA greffé est validée en réalisant un film fin par thermo compression avec une presse hydraulique thermo régulée. Le film obtenu est parfaitement homogène indiquant ainsi que la poudre de PA 12 greffée par 5% p/p de glycidoxypropyl triméthoxy silane est toujours thermoplastique.

Ainsi, les particules de PA 12 greffées avec 5% p/p de glycidoxypropyl triméthoxysilane selon l'invention sont sphériques et de taille homogène et adaptée à la technique SLS. La poudre ainsi obtenue est sèche et possède de bonnes propriétés d'écoulement. De plus, le profil thermique de la poudre de particules sphériques de PA 12 greffées avec 5% p/p de glycidoxypropyl triméthoxysilane selon l'invention n'a pas été modifié par le greffage et conserve ainsi les propriétés thermiques adaptées à la technique SLS.

**Tableau 1 : caractéristiques thermiques mesurées par DSC**

| polymère | 1^{ière} rampe de chauffe | | | Rampe de refroidissement | | | 2^{ième} rampe de chauffe | | |
|---|---|---|---|---|---|---|---|---|---|
| | Tfus Onset (°C) | Tfus pic (°C) | ΔHfus (J/g) | Tcrist Offset (°C) | Tcrist pic (°C) | ΔHcrist (J/g) | Tfus Onset (°C) | Tfus Peak (°C) | ΔHfus (J/g) |
| PA 12 (Orgasol Invent Smooth d'Arkema) | 174 | 182 | -98 | 154 | 151 | 54,5 | 167 | 172/178 | -52,8 |
| PA 11 (Rilsan Invent Natural d'Arkema) | 198 | 202 | -106,4 | 164 | 160 | 45,0 | 178 | 183/189 | -46,0 |
| Exemple 1 | 174 | 181 | -86,5 | 151 | 148 | 48,9 | 170 | 172/178 | -48 |
| Exemple 2 | 175 | 184 | -93,5 | 152 | 148 | 51,8 | 165 | -/179 | -53,5 |
| Exemple 3 | 178 | 183 | -86,5 | 151 | 148 | 48,9 | 170 | 172/178 | -48,0 |
| Exemple 4 | 199 | 205 | -103,6 | 161 | 156 | 44,6 | 176 | -/186 | -48,0 |
| Exemple 5 | 168 | 179 | -42,3 | 151 | 147 | 58,6 | 168 | 179 | -51,3 |
| Exemple 6 | 169 | 179 | -51 | 151 | 148 | 44,7 | 170 | -/180 | -53,0 |
| Exemple 7 | 177 | 191 | -40,5 | 157 | 162 | 47,2 | 174 | 183/190 | -48,0 |
| Exemple comparatif | 168 | 179 | -41 | 159 | 152 | 44,6 | 169 | 179 | -49 |

**Tableau 2 : granulométrie des poudres**

| Polymère | Distribution granulométrique (µm) | | | | | | |
|---|---|---|---|---|---|---|---|
| | En volume | | | | En nombre | | |
| | D10 | D50 | D90 | D90-D10 | D10 | D50 | D90 |
| PA 12 (Orgasol Invent Smooth) | 28 | 38 | 51 | 23 | 24 | 32 | 44 |
| PA 11 (Rilsan Invent Natural) | 15 | 37 | 71 | 56 | 6 | 9 | 22 |
| Exemple 1 | 26 | 37 | 52 | 26 | 22 | 33 | 44 |
| Exemple 2 | 28 | 38 | 53 | 25 | 24 | 33 | 45 |
| Exemple 3 | 27 | 41 | 54 | 27 | 23 | 35 | 46 |
| Exemple 4 | 16 | 40 | 74 | 58 | 8 | 12 | 24 |
| Exemple comparatif | 35 | 71 | 121 | 86 | 5 | 10 | 35 |

### Exemple 2: préparation d'une poudre de particules sphériques de polyamide réticulable de type PA 12 greffées avec 5% p/p de glycidoxypropyl triéthoxysilane

Une poudre de PA 12 adaptée au frittage laser (Orgasol invent smooth commercialisé par la société Arkema) (D50 = 38 µm, grain sphérique, température de fusion égale à 182°C, température de transition vitreuse égale à 40°C) est modifiée selon l'invention par 5% p/p de glycidoxypropyl triéthoxy silane (Silquest A1871 commercialisé par la société Momentive Performance Materials Inc). De la poudre de PA 12 (Orgasol invent smooth commercialisé par la société Arkema) imprégnée de glycidoxypropyl triéthoxy silane (Silquest A1871 commercialisé par la société Momentive Performance Materials Inc) est également préparée comme décrit à l'exemple 1.

Comme dans l'exemple 1, l'analyse infra rouge montre que le pic d'absorbance à 760 cm⁻¹, caractéristique de la fonction époxyde du silane présent dans le mélange initial (cf. figure 2, courbe 3), a disparu après la phase de greffage (cf. figure 2, courbe 4). Ces fonctions époxydes sont consommées par la réaction de greffage.

Le pic d'absorbance caractéristique des liaisons Si-O-C à 950 cm⁻¹ est déplacé à 1025 cm⁻¹. Les pics d'absorbance des liaisons -O-CH₂- du silane, à 1070 cm⁻¹ et 1163 cm⁻¹ sont déplacées à 1110 cm⁻¹ et 1185 cm⁻¹.

Le déplacement des pics d'absorbance des liaisons caractéristiques du silane résulte du greffage de ce dernier sur le polyamide.

L'analyse ATG donne un taux de volatile inférieure à 0,2% indiquant un greffage quasiment complet.

L'analyse DSC de la poudre de PA 12 modifiée montre que le profil thermique de la poudre de PA 12 n'est pas modifié par le greffage (cf. tableau 1).

Comme dans l'exemple 1, la granulométrie de la poudre et la forme sphérique des grains de PA 12 ne sont pas modifiées (cf. tableau 2 et figure 7). La taille des particules reste homogène : la valeur (d90-d10) est de 25 µm, et est comparable à celle du PA12 (23 µm).

Le film obtenu par thermo compression est parfaitement homogène. La poudre de PA 12 greffée par 5% p/p de glycidoxypropyl triéthoxy silane est toujours thermoplastique.

Ainsi, les particules de PA 12 greffées avec 5% p/p de glycidoxypropyl triéthoxysilane selon l'invention sont sphériques et de taille homogène et adaptée à la technique SLS. La poudre ainsi obtenue est sèche et possède de bonnes propriétés d'écoulement. De plus, le profil thermique de la poudre de particules sphériques de PA 12 greffées avec 5% p/p de glycidoxypropyl triéthoxysilane selon l'invention n'a pas été modifié par le greffage et conserve ainsi les propriétés thermiques adaptées à la technique SLS.

### Exemple 3 : préparation d'une poudre de particules sphériques de polyamide réticulable de type PA 12 greffées avec 8% p/p de glycidoxypropyl triéthoxysilane

Une poudre de PA 12 adaptée au frittage laser (Orgasol invent smooth commercialisé par la société Arkema) (D50 = 38 µm, grain sphérique, température de fusion égale à 182°C, température de transition vitreuse égale à 40°C) est modifiée suivant l'invention par 8% p/p de glycidoxypropyl triéthoxy silane (Silquest A1871 commercialisé par la société Momentive Performance Materials Inc), comme décrit dans la partie « matériels et méthode ».

Comme dans l'exemple 1, l'analyse infra rouge montre que le pic d'absorbance à 760 cm⁻¹ caractéristique de la fonction époxyde du silane, présent dans le mélange initial (cf. figure 3, courbe 3), a disparu après la phase de greffage (cf. figure 3, courbe 4). Ces fonctions époxydes sont consommées par la réaction de greffage.

Le pic d'absorbance caractéristique des liaisons Si-O-C à 950 cm⁻¹ est déplacé à 1025 cm⁻¹. Les pics d'absorbance des liaisons -O-CH₂- du silane, à 1070 cm⁻¹ et 1163 cm⁻¹, sont déplacées à 1110 cm⁻¹ et 1185 cm⁻¹.

Le déplacement des pics d'absorbance des liaisons caractéristiques du silane résulte du greffage de ce dernier sur le polyamide.

Le pic d'absorbance à 1072 cm⁻¹ est toujours présent en fin de réaction de greffage et co-existe avec le pic à 1110 cm⁻¹ (cf. figure 3, courbe 4). Le greffage n'est donc pas complet.

L'analyse ATG donne un taux de volatile de l'ordre de 2 - 2,5%.

Malgré un greffage incomplet, l'analyse DSC de la poudre de PA 12 modifiée avec 8% p/p de silane montre que le profil thermique de la poudre de PA 12 n'est pas modifié ni par le greffage et ni par la présence de silane non greffé (cf. tableau 1).

La granulométrie de la poudre et la forme sphérique des grains de PA 12 ainsi greffés ne sont pas modifiées (cf. tableau 2 et figure 7). La taille des particules reste homogène : la valeur (d90-d10) est de 27 µm, et est comparable à celle du PA12 (23 µm).

Le film obtenu par thermo compression présente des bulles dues à l'évaporation du silane. Par contre il ne présente pas d'hétérogénéité. La poudre de PA greffée par 8% p/p de glycidoxypropyl triéthoxy silane est toujours thermoplastique.

Ainsi, là encore, les particules de PA 12 greffées avec 8% p/p de glycidoxypropyl triéthoxysilane selon l'invention sont sphériques et de taille homogène et adaptées à la technique SLS. La poudre ainsi obtenue est sèche et possède de bonnes propriétés d'écoulement. De plus, le profil thermique de la poudre de particules sphériques de PA 12 greffées avec 8% p/p de glycidoxypropyl triéthoxysilane selon l'invention n'a pas été modifié par le greffage et conserve ainsi les propriétés thermiques adaptées à la technique SLS.

### Exemple 4 : préparation d'une poudre de particules sphériques de polyamide réticulable de type PA 11 greffées avec 6% p/p de glycidoxypropyl triéthoxysilane

Une poudre de PA 11 adaptée au frittage laser (Rilsan Invent Natural commercialisé par la société Arkema) (D50 = 37 µm, forme des grains irrégulière, température de fusion égale à 202°C, température de transition vitreuse égale à 41°C) est modifiée suivant l'invention en utilisant 6% p/p de glycidoxypropyl triéthoxy silane (Silquest A1871 commercialisé par la société Momentive Performance Materials Inc), comme décrit dans la partie matériels et méthode.

L'analyse infra rouge montre que le pic d'absorbance à 760 cm⁻¹ caractéristique de la fonction époxyde du silane présent dans le mélange initial (cf. figure 4, courbe 3), a disparu après la phase de greffage (cf. figure 4, courbe 4). Ces fonctions époxydes sont consommées par la réaction de greffage.

Le pic d'absorbance caractéristique des liaisons Si-O-C à 952 cm⁻¹ est déplacé à 1037 cm⁻¹. Les pics d'absorbance des liaisons -O-CH₂- du silane, à 1074 cm⁻¹ et 1163 cm⁻¹ sont déplacées à 1120 cm⁻¹ et 1198 cm⁻¹.

Le déplacement des pics d'absorbance des liaisons caractéristiques du silane résulte du greffage de ce dernier sur le polyamide.

L'analyse ATG donne un taux de volatile inférieure à 0,2% indiquant un greffage quasiment complet.

L'analyse DSC de la poudre de PA 11 greffée montre que le profil thermique de la poudre de PA 11 n'est pas modifié par le greffage (cf. tableau 1).

La granulométrie de la poudre et la forme des grains de PA 11 greffés ne sont pas modifiées (cf. tableau 2 et figure 7). La taille des particules reste homogène : la valeur (d90-d10) est de 58 µm, et est comparable à celle du PA11 (56 µm).

Le film obtenu par thermo compression est parfaitement homogène. La poudre de PA 11 greffée par 6% p/p de glycidoxypropyl triéthoxy silane est toujours thermoplastique.

Ainsi, les particules de PA 11 greffées avec 6% p/p de glycidoxypropyl triéthoxysilane selon l'invention sont de taille homogène et adaptées à la technique SLS. La poudre ainsi obtenue est sèche et possède de bonnes propriétés d'écoulement. De plus, le profil thermique de la poudre de particules sphériques de PA 11 greffées avec 6% p/p de glycidoxypropyl triéthoxysilane selon l'invention n'a pas été modifié par le greffage et conserve ainsi les propriétés thermiques adaptées à la technique SLS.

### Exemple comparatif:

Une poudre de PA 12 adaptée au frittage laser (Orgasol invent smooth commercialisé par la société Arkema) (D50 = 38 µm, grain sphérique, température de fusion égale à 182°C, température de transition vitreuse égale à 40°C) est modifiée par extrusion réactive en utilisant 5% p/p de glycidoxypropyl triméthoxy silane (Silquest A 187 commercialisé par la société Momentive Performance Materials Inc).

Le greffage est réalisé sur une extrudeuse bi-vis corrotative de diamètre 26 mm et de longueur 80 D, comprenant 16 zones de chauffe indépendantes de 5 D. Concernant le profil de température, la première zone est régulée à 200°C. Toutes les autres zones sont régulées à 220°C. Le greffage est donc réalisé en phase fondue.

Le profil de vis utilisé est un profil de vis standard classiquement utilisé pour le greffage de matière thermoplastique. La vitesse de rotation des vis est fixée à 100 tr/min pour un débit de polyamide fixé à 4 kg/h.

Le PA 12 et le silane sont incorporés en pied d'extrudeuse en trémie principale sous la forme d'un mélange sec.

En sortie d'extrudeuse, le jonc est refroidi dans l'eau et granulé.

Les granulés obtenus sont séchés à 80°C pendant 4 heures pour enlever l'humidité de surface.

Le greffage étant réalisé en extrudeuse en phase fondue, les granulés de PA12 modifié obtenus sont greffés de façon homogène, à cœur et en surface.

Une analyse thermique différentielle à balayage (DSC) est réalisée sur les granulés obtenus afin de comparer le profil thermique des granulés de PA modifié. Cette analyse thermique montre que le profil thermique du PA 12 modifié par extrusion réactive est modifié (cf. tableau 1). Notamment, la température de fusion observée (Tfus pic) et Tfus onset pour le PA 12 modifié sont décalées vers les basses températures. La température de cristallisation (Tcrist pic) et Tcrist offset sont décalées vers les hautes températures. La fenêtre de frittage (correspondant à la différence entre Tfus onset et Tcrist offset) est donc réduite d'environ 11°C. Les enthalpies de fusion et cristallisation sont quant à elles diminuées.

Les granulés obtenus sont ensuite cryo broyés avec un Broyeur de laboratoire Retsch ZM 200 (Grille de 250 µm, vitesse des couteaux de 12000 tr/min). Pour cela, les granulés sont refroidis à l'azote liquide pendant 30 min avant d'être introduits dans le broyeur.

La poudre obtenue est ensuite tamisée à 100 µm avec un tamiseur de laboratoire Retsch AS200.

La granulométrie de la poudre obtenue est mesurée par granulométrie laser et la forme des particules est observée par microscopie optique. Par rapport à la poudre de PA 12 non modifiée (Orgasol invent smooth commercialisé par la société Arkema), la distribution des tailles de particules est modifiée et la forme des particules est très hétérogène, irrégulière et non sphérique (cf. tableau 2 et figure 7).

Les granulés de PA 12 modifiés sont thermoplastiques. Le film obtenu à partir de ces derniers est parfaitement homogène. Par contre le film obtenu à partir de la poudre obtenue par broyage est hétérogène. Des lignes de flux matière sont observables par transparence, indiquant une augmentation de viscosité voire un début de réticulation du PA 12.

Le PA 12, modifié par extrusion réactive et broyé, est donc inadapté au procédé d'impression 3D par frittage laser sélectif, notamment en raison de la distribution de la taille et de la forme des particules, et de la fenêtre de frittage réduite résultant de la diminution de la température de fusion et de l'augmentation de la température de cristallisation.

Le film pressé à partir de la poudre est immergé dans l'eau à 90°C pendant 12 heures, afin d'obtenir la réticulation par l'hydrolyse condensation des groupements alcoxysilanes. Après le cycle d'immersion, le film est séché à 90°C pendant 6 heures en étuve ventilée. Des éprouvettes sont ensuite découpées à l'emporte pièce.

La réticulation est mise en évidence par une analyse thermo-mécanique dynamique (DMTA) en traction des éprouvettes découpées, réalisée à une fréquence de 1 Hz et avec une rampe de température de 5 °C/min.

Les courbes de variation du module élastique et de la tangente de l'angle de perte Delta (tan Delta) montrent qu'après la fusion de la phase cristalline du PA 12 greffé avec 5% p/p de glycidoxypropyl triéthoxysilane par extrusion réactive, le module élastique ne s'effondre pas et est maintenu jusqu'à 300 °C, alors que celui du PA 12 de référence (Orgasol invent smooth commercialisé par la société Arkema) s'effondre complètement à la fusion de la phase cristalline (figure 4).

### Exemple 5 : utilisation de la poudre de particules sphériques de polyamide réticulable de l'exemple 2 en SLS

La poudre de particules de PA 12 greffées avec 5% p/p de glycidoxypropyl triéthoxysilane suivant l'exemple 2 est frittée sur une imprimante 3D de type SnowWhite de la société Sharebot pour réaliser une éprouvette de type H2 définie dans la norme ISO 527-1 : 2012 pour la détermination de propriétés mécaniques en traction des matières plastiques.

L'épaisseur de couche utilisée pour la réalisation de cet essai est de 100 µm.

Les paramètres de frittage sont indiqués dans le tableau 3. Ces paramètres sont la puissance du laser, la vitesse de balayage du laser et la température Environnement.

Sur ce type de machine, deux modes de régulation de la température sont possibles : une régulation par la mesure de la température de la chambre de frittage réalisée grâce à un thermocouple, la température Environnement, et une régulation par la mesure de la température de surface du lit de poudre réalisée grâce à capteur infrarouge. Pour le frittage de la poudre de PA 12 modifiée suivant l'exemple 2, le mode de régulation par la mesure de la température Environnement est choisi.

**Tableau 3 : paramètres de frittage sur une imprimante 3D de type SnowWhite de la société Sharebot**

| Poudre | Laser | | Température (°C) | |
|---|---|---|---|---|
| | Puissance (W) | Vitesse (mm/s) | Consigne | Mode de contrôle |
| PA 12 (Orgasol Smooth Invent de la société Arkema) | 2,46 | 1800 | 153 | Environnement |
| PA 11 (Rilsan Invent Natural de la société Arkema) | 4,70 | 1600 | 167 | Environnement |
| Exemple 5 | 7,84 | 1600 | 155 | Environnement |
| Exemple 6 | 5,60 | 1000 | 149 | Environnement |
| Exemple 7 | 7,84 | 1600 | 165 | Environnement |

Par rapport à la poudre de PA 12 non greffée (Orgasol Invent Smooth de la société Arkema), la puissance du rayonnement laser et la vitesse de balayage du laser ont été modifiées de façon à transférer plus d'énergie à la poudre pour la fondre correctement et obtenir un bon frittage des pièces.

La thermoplasticité des éprouvettes H2 obtenues par frittage laser est validée par la réalisation d'un film fin par thermo compression avec une presse hydraulique thermo régulée.

Lors du frittage, la poudre de PA 12 greffée avec 5% p/p de glycidoxypropyl triéthoxysilane ne réticule pas lors du passage du laser.

Egalement, la thermoplasticité de la poudre de particules de PA 12 greffées n'ayant pas subi l'impact du laser est validée par la réalisation d'un film fin. La poudre de PA 12 greffée ne réticule donc pas sous l'action de la chaleur. Elle peut être réutilisée un grand nombre de fois (au moins 5 fois) pour réaliser d'autres essais de frittage.

L'analyse DSC de l'éprouvette H2 frittée montre que le profil thermique de la poudre après la fusion et la recristallisation intervenues lors du frittage est comparable à celui de la poudre de PA modifiée suivant l'exemple comparatif. On retrouve ainsi les résultats de l'exemple comparatif qui montre qu'un PA 12 présentant un profil thermique adapté au frittage laser sélectif perd ce dernier lorsqu'il est fondu et recristallisé.

La réticulation des pièces frittées en PA modifié, provoquée par l'hydrolyse condensation des groupements alcoxysilanes, est réalisée par immersion dans l'eau à 90°C pendant 12 heures.

Après le cycle d'immersion les éprouvettes sont séchées à 90°C pendant 6 heures en étuve ventilée.

La réticulation est mise en évidence par une analyse thermo-mécanique dynamique (DMTA) réalisée en traction, à une fréquence de 1 Hz et avec une rampe de température de 5°C/min.

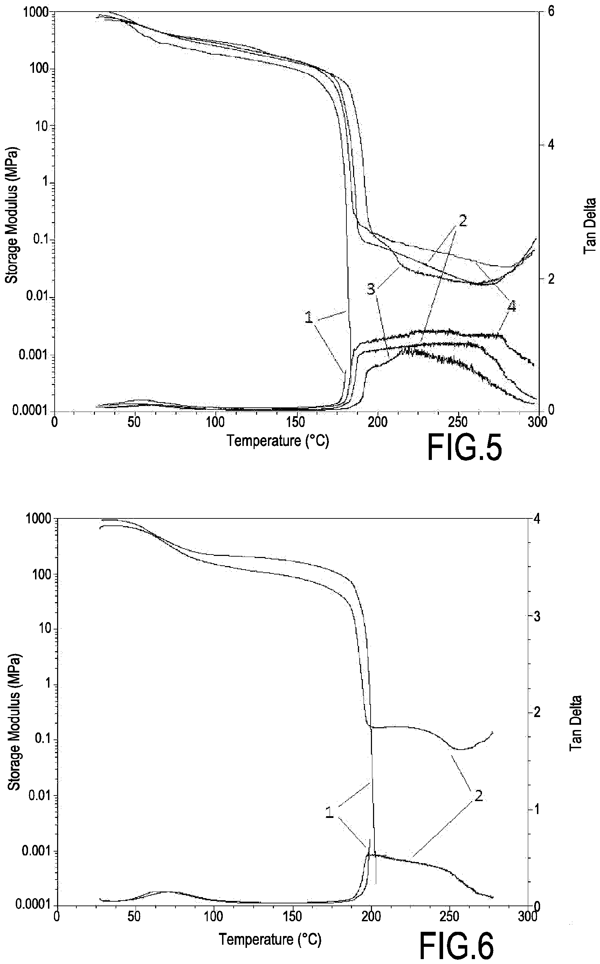

Les courbes de variation du module élastique et de la tangente de l'angle de perte Delta (tan Delta) montrent qu'après la fusion de la phase cristalline du PA 12 greffé avec 5% p/p de glycidoxypropyl triéthoxysilane, le module élastique ne s'effondre pas et est maintenu jusqu'à 300 °C, alors que celui du PA 12 de référence (Orgasol invent smooth commercialisé par la société Arkema) s'effondre complètement à la fusion de la phase cristalline (figure 5).

Ce comportement est comparable à celui d'un polyéthylène réticulable par voie silane (Pex -b) bien connu de l'homme de l'art, qui présente généralement des taux de réticulation de 60 à 70%.

Ainsi, la poudre de particules de PA 12 greffées avec 5% p/p de glycidoxypropyl triéthoxysilane selon l'invention ne réticule pas et reste thermoplastique lors du passage du laser pendant l'étape de frittage. Après réticulation d'une éprouvette frittée, les propriétés thermomécaniques sont améliorées comparé à celles d'une pièce frittée à partir d'une poudre de particules de PA 12 non réticulable.

Dans la figure 5, la comparaison des propriétés thermomécaniques du PA12 modifié suivant l'invention et réticulé après frittage laser sélectif (courbe 2), avec celles du PA12 modifié par extrusion réactive suivant l'exemple comparatif et réticulé après mise en œuvre par thermo-compression (courbe 4), montre que le greffage de l'agent réticulant suivant l'invention conduit à un niveau de réticulation proche de celui obtenu lorsque le greffage est réalisé par extrusion réactive.

Ce résultat prouve que la modification de la poudre suivant l'invention conduit bien à un greffage en surface et à cœur des particules, dans la mesure où les propriétés thermomécaniques du PA12 modifié suivant l'invention et réticulé après frittage laser sélectif sont comparables à celles d'un PA12 greffé à cœur et réticulé.

Un greffage en surface uniquement conduirait à la réticulation d'une faible fraction du PA (moins de 10% du PA). Avec un tel taux de PA réticulé, le PA12 modifié se comporterait comme un PA12 chargé à 10% d'une quelconque charge. L'homme de l'art sait que pour un tel matériau, le module élastique s'effondrerait après la température de fusion tout comme le PA12 non chargé et non modifié.

### Exemple 6 : utilisation de la poudre de particules sphériques de polyamide réticulable de l'exemple 3 en SLS

La poudre de particules de PA 12 greffées avec 8% p/p de glycidoxypropyl triéthoxysilane suivant l'exemple 3 est frittée sur une imprimante 3D de type SnowWhite de la société Sharebot pour réaliser une éprouvette de type H2.

L'épaisseur de couche utilisée pour la réalisation de cet essai est de 100 µm et le mode de régulation par la mesure de la température Environnement.

Les paramètres de frittage sont indiqués dans le tableau 3.

De manière analogue à l'exemple 5, le frittage de cette poudre de particules de PA 12 greffées nécessite un apport d'énergie plus important par rapport au PA 12 non greffé, pour correctement fondre la poudre au passage laser et obtenir un bon frittage des pièces.

La thermoplasticité des éprouvettes H2 obtenues par frittage laser et la thermoplasticité de la poudre de particules de PA 12 greffées, n'ayant pas été frittée mais ayant subi le cycle thermique complet de la procédure de frittage, sont validées par la réalisation d'un film fin par thermo compression avec une presse hydraulique thermo régulée.

L'analyse DSC de l'éprouvette H2 frittée montre un profil thermique semblable à celui de l'éprouvette frittée dans l'exemple 5.

Après la réticulation des pièces obtenues par frittage à partir du PA modifié, réalisée par immersion dans l'eau à 90°C pendant 12 heures, les éprouvettes sont séchées à 90°C pendant 6 heures en étuve ventilée avant d'être évaluées par analyse thermo-mécanique dynamique (réalisée en traction, à une fréquence de 1 Hz et avec une rampe de température de 5°C/min).

Les courbes de variation du module élastique et de la tangente de l'angle de perte Delta montrent qu'après la fusion de la phase cristalline du PA 12 modifié, le module élastique ne s'effondre pas et est maintenu jusqu'à 300 °C, alors que celui de PA 12 de référence (Orgasol Invent Smooth de la société Arkema) s'effondre complètement à la fusion de la phase cristalline (cf. figure 5). La diminution de module liée à la fusion est décalée d'une dizaine de degrés vers la haute température par rapport au PA 12 de référence et au PA 12 réticulé de l'exemple 5. Ce décalage est vraisemblablement lié à l'excès de silane non greffé de la poudre préparée suivant l'exemple 3, qui malgré tout participe au processus d'hydrolyse condensation et contribue à augmenter la densité de réticulation.

Ainsi, la poudre de particules de PA 12 greffées avec 8% p/p de glycidoxypropyl triéthoxysilane selon l'invention ne réticule pas et reste thermoplastique lors du passage du laser pendant l'étape de frittage. Après la réticulation d'une éprouvette frittée, les propriétés thermomécaniques sont améliorées comparé à celles d'une pièce frittée à partir d'une poudre de particules de PA 12 non réticulable.

Dans la figure 5, la comparaison des propriétés thermomécaniques du PA12 modifié suivant l'invention et réticulé après frittage laser sélectif (courbe 3), avec celles du PA12 modifié par extrusion réactive suivant l'exemple comparatif et réticulé après mise en œuvre par thermo-compression (courbe 4), montre comme pour l'exemple 5 que le greffage de l'agent réticulant suivant l'invention conduit à un niveau de réticulation proche de celui obtenu lorsque le greffage est réalisé par extrusion réactive.

Ce résultat prouve que la modification de la poudre suivant l'invention conduit bien à un greffage en surface et à cœur des particules.

### Exemple 7 : utilisation de la poudre de particules sphériques de polyamide réticulable de l'exemple 4 en SLS

La poudre de particules de PA 11 greffées avec 5% p/p de glycidoxypropyl triéthoxysilane suivant l'exemple 4 est frittée sur une imprimante 3D de type SnowWhite de la société Sharebot pour réaliser une éprouvette de type H2. L'épaisseur de couche utilisée pour la réalisation de cet essai est de 100 µm et le mode de régulation par la mesure de la température Environnement est choisi. Les paramètres de frittage sont indiqués dans le tableau 3.

Par rapport au PA 11 de référence (Rilsan Invent Natural commercialisé par la société Arkema), la poudre de PA 11 modifiée selon l'exemple 4 nécessite un apport d'énergie plus important au passage du laser pour fondre correctement et obtenir un bon frittage des pièces.

La thermoplasticité des éprouvettes H2 obtenues par frittage laser et la thermoplasticité de la poudre de particules de PA 11 modifiée, n'ayant pas été frittée mais ayant subi le cycle thermique complet de la procédure de frittage, sont validées par la réalisation d'un film fin par thermo compression avec une presse hydraulique thermo régulée.

Après la réticulation des pièces obtenues par frittage à partir de la poudre de particules de PA 11 greffé selon l'exemple 4, réalisée par immersion dans l'eau à 90°C pendant 12 heures, les éprouvettes sont séchées à 90°C pendant 6 heures en étuve ventilée avant d'être évaluées par analyse thermo-mécanique dynamique (réalisée en traction, à une fréquence de 1 Hz et avec une rampe de température de 5°C/min).

Les courbes de variation du module élastique et de la tangente de l'angle de perte Delta montrent qu'après la fusion de la phase cristalline du PA 11 modifié, le module élastique ne s'effondre pas et est maintenu jusqu'à 300 °C, alors que celui de PA 11 de référence (Rilsan Invent Natural commercialisé par la société Arkema) s'effondre complètement à la fusion de la phase cristalline (cf. figure 6).

Ces propriétés thermomécaniques indiquent, comme pour les exemples 5 et 6, que le greffage sur le PA11 de l'agent réticulant suivant l'invention conduit bien à un greffage en surface et à cœur des particules du PA11 adapté au procédé de frittage laser sélectif.

## Revendications

1. Poudre de particules sphériques d'un polyamide (I) fonctionnalisé par des fonctions de réticulation Rt le rendant réticulable, lesdites fonctions de réticulation Rt étant choisies parmi les groupes alcoxysilane, chlorosilane et acyloxysilane, **caractérisée en ce que** lesdites fonctions de réticulation Rt sont présentes en surface et dans la masse desdites particules et **en ce que** lesdites particules de polyamide réticulable (I) ont un diamètre moyen d50, en volume mesuré selon la technique de granulométrie laser en voie sèche, appartenant à la gamme allant de 20 à 100 microns.

2. Poudre de particules sphériques de polyamide réticulable (I) selon la revendication 1, **caractérisée en ce que** les diamètres moyens d90 et d10, en volume mesurés selon la technique de granulométrie laser en voie sèche, desdites particules de polyamide réticulable (I) sont tels que (d90-d10) appartient à la gamme allant de 10 à 80 microns, de préférence de 20 à 60 microns.

3. Poudre de particules sphériques de polyamide réticulable (I) selon la revendication 1 ou la revendication 2, **caractérisée en ce que** le polyamide est un polyamide aliphatique ou semi-aromatique semi cristallin, de préférence aliphatique.

4. Poudre de particules sphériques de polyamide réticulable (I) selon l'une quelconque des revendications 1 à 3, **caractérisée en ce que** le polyamide est choisi parmi le PA 6, le PA 6.6, le PA 10.10, le PA 10.12, le PA 11 et le PA 12.

5. Poudre de particules sphériques de polyamide réticulable (I) selon l'une quelconque des revendications 1 à 4, **caractérisée en ce que** les fonctions de réticulation Rt sont des groupes alcoxysilane.

6. Poudre de particules sphériques de polyamide réticulable (I) selon l'une quelconque des revendications 1 à 5, **caractérisée en ce que** les fonctions de réticulation Rt sont introduites par greffage sur un polyamide (II).

7. Poudre de particules sphériques de polyamide réticulable (I) selon la revendication 6, **caractérisée en ce que** les fonctions de réticulation Rt sont apportées par greffage direct sur des fonctions amine et/ou carboxyle et/ou amide du polyamide (II), nommées fonctions réactives Rr, d'un agent de réticulation (III) de formule :
Rg-R1-Si(R2)₃₋ₐ(R3)ₐ (III)
dans laquelle :
- a = 0, 1 ou 2,
- Rg est une fonction de greffage apte à réagir avec Rr,
- R1 est un groupe divalent hydrocarboné ou une liaison covalente reliant directement Si à Rg,
- R2 est un groupe alcoxy ou acyle ou représente un halogène, les groupes R2 étant identiques ou différents quand a = 0 ou 1,
- R3 est un groupe alkyle, les groupes R3 étant identiques ou différents quand a = 2.

8. Poudre de particules sphériques de polyamide réticulable (I) selon la revendication 7, **caractérisée en ce que** la fonction de greffage Rg de l'agent de réticulation (III) comprend au moins un groupe choisi parmi :
- le groupe amino -NH₂,
- les groupes présentant une insaturation éthylénique, de préférence les groupes vinyle, allyle et méthacryloyle,
- les groupes époxy, étant de préférence choisis parmi les groupes glycidyle, glycidoxy et oxiranyle,
- la fonction thiol -SH,
- les atomes d'halogène, de préférence de chlore,
- le groupe isocyanate -N=C=O, et
- le groupe acylurée -CO-NH-CO-NH₂ ou alkylurée R-NH-CO-NH₂ avec R représentant un groupe divalent hydrocarboné.

9. Poudre de particules sphériques de polyamide réticulable (I) selon la revendication 7 ou 8, **caractérisée en ce que** l'agent de réticulation (III) est tel que a = 0, R1 est un groupe hydrocarboné divalent, de préférence un groupe propylène, R2 est un groupe alcoxy, de préférence méthoxy ou éthoxy, et Rg est un groupe époxy, et de préférence un groupe glycidoxy.

10. Poudre de particules sphériques de polyamide réticulable (I) selon l'une quelconque des revendications 1 à 9, **caractérisée en ce que** le polyamide réticulable (I) présente un taux de fonctions de réticulation Rt appartenant à la gamme allant de 0,3 à 9% en poids, de préférence de 1 à 5% en poids, par rapport au poids total du polyamide réticulable.

11. Procédé de préparation d'une poudre de particules de polyamide réticulable (I) selon l'une quelconque des revendications 1 à 10, **caractérisé en ce qu'**il comprend les étapes suivantes :
a) Disposer d'une poudre de particules sphériques d'un polyamide (II), lesdites particules ayant un diamètre moyen d50, en volume mesuré selon la technique de granulométrie laser en voie sèche, appartenant à la gamme allant de 20 à 100 microns,
b) Disposer d'un agent de réticulation (III) comprenant, d'une part, au moins une fonction de réticulation Rt choisie parmi les groupes alcoxysilane, chlorosilane et acyloxysilane, et, d'autre part, au moins une fonction de greffage Rg apte à réagir sur les fonctions amine et/ou carboxyle et/ou amide du polyamide (II), nommées fonctions réactives Rr,
c) Mélanger la poudre de particules sphériques de polyamide (II) avec l'agent de réticulation (III) pour obtenir un mélange (II+III),
d) Chauffer le mélange (II+III) issu de l'étape c) à une température T1 appartenant à la gamme allant de la température de transition vitreuse du polyamide (II) Tg_{(II)} + 5°C à la température de transition vitreuse du polyamide (II) Tg_{(II)} + 70°C si Tg_{(II)} + 70°C ≤ Tcrist_{(II)} - 35 °C ou appartenant à la gamme allant de Tg_{(II)} + 5°C à la température de cristallisation du polyamide (II) Tcrist_{(II)} - 35 °C si Tg_{(II)} + 70°C > Tcrist_{(II)} - 35 °C, pour obtenir une poudre de particules sphériques de polyamide imprégnée d'agent de réticulation (IV), et
e) Chauffer la poudre de polyamide imprégnée d'agent de réticulation (IV) à une température T2 supérieure à T1 et inférieure à la température de cristallisation Tcrist_{(II)} du polyamide (II), pour obtenir une poudre de polyamide réticulable (I).

12. Procédé de préparation d'une poudre de particules sphériques de polyamide réticulable (I) selon la revendication 11, **caractérisé en ce que** l'agent de réticulation (III) est de formule suivante :
Rg-R1-Si(R2)₃₋ₐ(R3)ₐ (III)
dans laquelle :
- a = 0, 1 ou 2,
- Rg est une fonction de greffage apte à réagir avec les fonctions réactives Rr du polyamide (II),
- R1 est un groupe divalent hydrocarboné ou une liaison covalente reliant directement Si à Rg,
- R2 est un groupe alcoxy ou acyle ou un halogène, les groupes R2 étant identiques ou différents quand a = 0 ou 1,
- R3 est un groupe alkyle, de préférence un groupe alkyle en C1-C6, les groupes R3 étant identiques ou différents quand a = 2.

13. Procédé de préparation d'une poudre de particules sphériques de polyamide réticulable (I) selon la revendication 11 ou 12, **caractérisé en ce que** le mélange à l'étape c) est effectué avec une quantité d'agent de réticulation (III) appartenant à la gamme allant de 1 à 10% en poids, de préférence de 3 à 8% en poids, et mieux encore de 4 à 6% en poids, par rapport au poids total d'agent de réticulation (III) et de polyamide (II).

14. Procédé de préparation d'une poudre de particules sphériques de polyamide réticulable (I) selon l'une quelconque des revendications 11 à 13, **caractérisé en ce qu'**il comprend une étape f), subséquente à l'étape e), d'ajout d'un agent d'écoulement, d'une charge renforçante, d'un agent ignifugeant, d'un stabilisant thermique, d'un agent antistatique ou conducteur, d'un agent colorant.

15. Utilisation d'une poudre de particules sphériques de polyamide réticulable (I) selon l'une quelconque des revendications 1 à 10 pour la préparation d'articles intermédiaires par la technique de frittage par laser sélectif.

16. Procédé de préparation d'un article intermédiaire à partir d'une poudre de particules sphériques de polyamide réticulable (I) selon l'une quelconque des revendications 1 à 10, par la technique de frittage par laser sélectif.

17. Procédé de préparation d'un article comprenant :
i. la formation d'un article intermédiaire par la technique de frittage par laser sélectif à partir d'une poudre de particules sphériques de polyamide réticulable (I) selon le procédé de la revendication 16, et
ii. la réticulation d'au moins une partie des fonctions réticulables Rt dudit polyamide réticulable (I) de l'article intermédiaire.

18. Procédé selon la revendication 17, **caractérisé en ce que** la réticulation est réalisée par hydrolyse, en particulier à l'air ambiant.

## Patentansprüche

1. Pulver aus sphärischen Partikeln eines Polyamids (I), das mit Vernetzungsfunktionen Rt funktionalisiert ist, die es vernetzbar machen, wobei die Vernetzungsfunktionen Rt aus den Alkoxysilan-, Chlorsilan- und Acyloxysilan-Gruppen ausgewählt sind, **dadurch gekennzeichnet, dass** die Vernetzungsfunktionen Rt an der Oberfläche und in der Masse der Partikel vorliegen und dass die Partikel aus vernetzbarem Polyamid (I) einen mittleren Durchmesser d50, im Volumen gemessen gemäß der Technik der Laser-Korngrößenmessung im Trockenverfahren, in dem Bereich von 20 bis 100 Mikrometer aufweisen.

2. Pulver aus sphärischen Partikeln aus vernetzbarem Polyamid (I) nach Anspruch 1, **dadurch gekennzeichnet, dass** die mittleren Durchmesser d90 und d10 pro Volumen, gemessen gemäß der Technik der Laser-Korngrößenmessung im Trockenverfahren, der Partikel aus vernetzbarem Polyamid (I) solche sind, dass (d90-d10) in den Bereich von 10 bis 80 Mikrometer, vorzugsweise von 20 bis 60 Mikrometer fällt.

3. Pulver aus sphärischen Partikeln aus vernetzbarem Polyamid (I) nach Anspruch 1 oder Anspruch 2, **dadurch gekennzeichnet, dass** das Polyamid ein aliphatisches Polyamid oder ein teilaromatisches, teilkristallines, vorzugsweise aliphatisches, Polyamid ist.

4. Pulver aus sphärischen Partikeln aus vernetzbarem Polyamid (I) nach einem der Ansprüche 1 bis 3, **dadurch gekennzeichnet, dass** das Polyamid aus PA 6, PA 6.6, PA 10.10, PA 10.12, PA 11 und PA 12 ausgewählt ist.

5. Pulver aus sphärischen Partikeln aus vernetzbarem Polyamid (I) nach einem der Ansprüche 1 bis 4, **dadurch gekennzeichnet, dass** die Vernetzungsfunktionen Rt Alkoxysilan-Gruppen sind.

6. Pulver aus sphärischen Partikeln aus vernetzbarem Polyamid (I) nach einem der Ansprüche 1 bis 5, **dadurch gekennzeichnet, dass** die Vernetzungsfunktionen Rt durch Aufpfropfen auf ein Polyamid (II) eingeführt werden.

7. Pulver aus sphärischen Partikeln aus vernetzbarem Polyamid (I) nach Anspruch 6, **dadurch gekennzeichnet, dass** die Vernetzungsfunktionen Rt durch direktes Aufpfropfen eines Vernetzungsmittels (III) der folgenden Formel auf Amin- und/oder Carboxyl -und/oder Amid-Funktionen des Polyamids (II) beigebracht werden, die als reaktive Funktionen Rr bezeichnet werden:
Rg-R1-Si(R2)₃₋ₐ(R3)ₐ (III)
wobei:
- a = 0, 1 oder 2,
- Rg eine Aufpfropf-Funktion ist, die in der Lage ist, mit Rr zu reagieren,
- R1 eine divalente Kohlenwasserstoff-Gruppe oder eine kovalente Bindung ist, die Si direkt an Rg bindet,
- R2 eine Alkoxy- oder Acyl-Gruppe ist oder ein Halogen darstellt, wobei die Gruppen R2 identisch oder unterschiedlich sind, wenn a = 0 oder 1 gilt,
- R3 eine Alkylgruppe ist, wobei die Gruppen R3 identisch oder unterschiedlich sind, wenn a = 2 gilt.

8. Pulver aus sphärischen Partikeln aus vernetzbarem Polyamid (I) nach Anspruch 7, **dadurch gekennzeichnet, dass** die Aufpfropf-Funktion Rg des Vernetzungsmittels (III) zumindest eine Gruppe umfasst, die ausgewählt ist aus:
- der Amino-Gruppe -NH₂,
- den Gruppen, die einfach ethylenisch ungesättigt sind, vorzugsweise den Vinyl-, Allyl- und Methacryloyl-Gruppen,
- den Epoxy-Gruppen, wobei sie vorzugsweise aus den Glycidyl-, Glycidoxy- und Oxiranyl-Gruppen ausgewählt sind,
- der Thiol-Funktion -SH,
- den Halogenatomen, vorzugsweise Chlor,
- der Isocyanat-Gruppe -N=C=O, und
- der Acylharnstoff-Gruppe -CO-NH-CO-NH₂ oder der Alkylharnstoff-Gruppe R-NH-CO-NH₂, wobei R eine divalente Kohlenwasserstoff-Gruppe darstellt.

9. Pulver aus sphärischen Partikeln aus vernetzbarem Polyamid (I) nach Anspruch 7 oder 8, **dadurch gekennzeichnet, dass** das Vernetzungsmittel (III) solcher Art ist, dass a = 0, R1 eine divalente Kohlenstoff-Gruppe, vorzugsweise eine PropylenGruppe ist, R2 eine Alkoxy-, vorzugsweise Methoxy- oder Ethoxy-Gruppe ist, und Rg eine Epoxy-Gruppe, und vorzugsweise eine Glycidoxy-Gruppe ist.

10. Pulver aus sphärischen Partikeln aus vernetzbarem Polyamid (I) nach einem der Ansprüche 1 bis 9, **dadurch gekennzeichnet, dass** das vernetzbare Polyamid (I) einen Gehalt an Vernetzungsfunktionen Rt in dem Bereich von 0,3 bis 9 Gew.-%, vorzugsweise von 1 bis 5 Gew.-%, in Bezug auf das Gesamtgewicht des vernetzbaren Polyamids aufweist.

11. Verfahren zur Herstellung eines Pulvers aus Partikeln aus vernetzbarem Polyamid (I) nach einem der Ansprüche 1 bis 10, **dadurch gekennzeichnet, dass** es die folgenden Schritte umfasst:
a) Bereitstellen eines Pulvers aus sphärischen Partikeln eines Polyamids (II), wobei die Partikel einen mittleren Durchmesser d50 pro Volumen, gemessen gemäß der Technik der Laser-Korngrößenmessung im Trockenverfahren, in dem Bereich von 20 bis 100 Mikrometer aufweisen,
b) Bereitstellen eines Vernetzungsmittels (III), das einerseits eine Vernetzungsfunktion Rt ausgewählt aus den Alkoxysilan-, Chlorsilan- und Acyloxysilan-Gruppen und andererseits zumindest eine Aufpfropf-Funktion Rg umfasst, die dazu geeignet ist, mit den Amin- und/oder Carboxyl- und/oder Amid-Funktionen des Polyamids (II) zu reagieren, die als reaktive Funktionen Rr bezeichnet werden,
c) Mischen des Pulvers aus sphärischen Polyamidpartikeln (II) mit dem Vernetzungsmittel (III), um eine Mischung (II+III) zu erhalten,
d) Erhitzen der Mischung (II+III), die in Schritt c) erhalten wurde, bei einer Temperatur T1 in dem Bereich, der von der Glasübergangstemperatur des Polyamids (II) Tg_{(II)} + 5 °C bis zu der Glasübergangstemperatur des Polyamids (II) Tg_{(II)} + 70 °C reicht, wenn Tg_{(II)} + 70 °C ≤ Tcrist_{(II)} - 35 °C, oder in dem Bereich, der von Tg_{(II)} + 5 °C bis zu der Kristallisationstemperatur des Polyamids (II) Tcrist_{(II)} - 35 °C reicht, wenn Tg_{(II)} + 70°C > Tcrist_{(II)} - 35 °C, um ein Pulver aus sphärischen Partikeln eines Polyamids zu erhalten, das mit dem Vernetzungsmittel (IV) imprägniert ist, und
e) Erhitzen des mit dem Vernetzungsmittel (IV) imprägnierten Pulvers aus Polyamid bei einer Temperatur T2 höher als T1 und niedriger als die Kristallisationstemperatur Tcrist_{(II)} des Polyamids (II), um ein Pulver aus vernetzbarem Polyamid (I) zu erhalten.

12. Verfahren zur Herstellung eines Pulvers aus sphärischen Partikeln aus vernetzbarem Polyamid (I) nach Anspruch 11, **dadurch gekennzeichnet, dass** das Vernetzungsmittel (III) eines nach folgender Formel ist:
Rg-R1-Si(R2)₃₋ₐ(R3)ₐ (III)
wobei:
- a = 0, 1 oder 2,
- Rg eine Aufpfropf-Funktion ist, die in der Lage ist, mit den reaktiven Funktionen Rr des Polyamids (II) zu reagieren,
- R1 eine divalente Kohlenwasserstoff-Gruppe oder eine kovalente Bindung ist, die Si direkt an Rg bindet,
- R2 eine Alkoxy- oder Acyl-Gruppe oder ein Halogen ist, wobei die Gruppen R2 identisch oder unterschiedlich sind, wenn a = 0 oder 1 gilt,
- R3 eine Alkylgruppe, vorzugsweise eine Alkylgruppe mit C1-C6 ist, wobei die Gruppen R3 identisch oder unterschiedlich sind, wenn a = 2 gilt.

13. Verfahren zur Herstellung eines Pulvers aus sphärischen Partikeln aus vernetzbarem Polyamid (I) nach Anspruch 11 oder 12, **dadurch gekennzeichnet, dass** die Mischung in Schritt c) mit einer Menge an Vernetzungsmittel (III) in dem Bereich von 1 bis 10 Gew.-%, vorzugsweise von 3 bis 8 Gew.-%, und noch bevorzugter von 4 bis 6 Gew.-%, in Bezug auf das Gesamtgewicht des Vernetzungsmittels (III) und des Polyamids (II) erfolgt.

14. Verfahren zur Herstellung eines Pulvers aus sphärischen Partikeln aus vernetzbarem Polyamid (I) nach einem der Ansprüche 11 bis 13, **dadurch gekennzeichnet, dass** es auf Schritt e) folgend einen Schritt f) der Zugabe eines Verlaufsmittels, einer verstärkenden Ladung, eines Flammschutzmittels, eines thermischen Stabilisators, eines antistatischen oder leitfähigen Mittels oder eines Farbstoffs umfasst.

15. Verwendung eines Pulvers aus sphärischen Partikeln aus vernetzbarem Polyamid (I) nach einem der Ansprüche 1 bis 10 zur Herstellung von Zwischenartikeln durch die Technik der selektiven Lasersinterung.

16. Verfahren zur Herstellung eines Zwischenartikels ausgehend von einem Pulver aus sphärischen Partikeln aus vernetzbarem Polyamid (I) nach einem der Ansprüche 1 bis 10 durch die Technik der selektiven Lasersinterung.

17. Verfahren zur Herstellung eines Artikels, umfassend:
i. die Bildung eines Zwischenartikels durch die Technik der selektiven Lasersinterung, ausgehend von einem Pulver aus sphärischen Partikeln aus vernetzbarem Polyamid (I) gemäß dem Verfahren nach Anspruch 16, und
ii. die Vernetzung zumindest eines Teils der vernetzbaren Funktionen Rt des vernetzbaren Polyamids (I) des Zwischenartikels.

18. Verfahren nach Anspruch 17, **dadurch gekennzeichnet, dass** die Vernetzung durch Hydrolyse, insbesondere in Umgebungsluft, verwirklicht wird.

## Claims

1. A powder of spherical particles of polyamide (I) functionalized by crosslinking functions Rt rendering it crosslinkable, said crosslinking functions Rt being selected from alkoxysilane, chlorosilane and acyloxysilane groups, **characterized in that** said crosslinking functions Rt are present at the surface and in the mass of said particles and **in that** said particles of crosslinkable polyamide (I) have a mean diameter d50, by volume measured with the dry laser granulometry technique, in the range 20 µm to 100 µm.

2. A powder of spherical particles of crosslinkable polyamide (I) according to claim 1, **characterized in that** the mean diameters d90 and d10, by volume measured with the dry laser granulometry technique, of said particles of crosslinkable polyamide (I) are such that (d90-d10) is in the range 10 µm to 80 µm, preferably 20 µm to 60 µm.

3. A powder of spherical particles of crosslinkable polyamide (I) according to claim 1 or claim 2, **characterized in that** the polyamide is an aliphatic or semi-aromatic, semi-crystalline polyamide, preferably aliphatic.

4. A powder of spherical particles of crosslinkable polyamide (I) according to any one of claims 1 to 3, **characterized in that** the polyamide is selected from PA 6, PA 6.6, PA 10.10, PA 10.12, PA 11 and PA 12.

5. A powder of spherical particles of crosslinkable polyamide (I) according to any one of claims 1 to 4, **characterized in that** the crosslinking functions Rt are alkoxysilane groups.

6. A powder of spherical particles of crosslinkable polyamide (I) according to any one of claims 1 to 5, **characterized in that** the crosslinking functions Rt are introduced onto a polyamide (II) by grafting.

7. A powder of spherical particles of crosslinkable polyamide (I) according to claim 6, **characterized in that** the crosslinking functions Rt are supplied by grafting, directly onto the amine and/or carboxyl and/or amide functions of the polyamide (II), termed reactive functions Rr, of a crosslinking agent (III) with formula:
Rg-R1-Si(R2)₃-a(R3)a (III)
in which:
• a = 0, 1, or 2;
• Rg is a grafting function that is capable of reacting with Rr;
• R1 is a divalent hydrocarbon group or a covalent bond connecting Si directly to Rg;
• R2 is an alkoxy or acyl group or represents a halogen, the groups R2 being identical or different when a = 0 or 1;
• R3 is an alkyl group, the groups R3 being identical or different when a = 2.

8. A powder of spherical particles of crosslinkable polyamide (I) according to claim 7, **characterized in that** the grafting function Rg of the crosslinking agent (III) comprises at least one group selected from:
• the amino group -NH₂;
• groups having an ethylenic unsaturation, preferably vinyl, allyl, and methacryloyl groups;
• epoxy groups, preferably selected from glycidyl, glycidoxy, and oxiranyl groups;
• the thiol function -SH;
• halogen atoms, preferably chlorine;
• the isocyanate group -N=C=O; and
• the acylurea group -CO-NH-CO-NH₂ or the alkylurea group R-NH-CO-NH₂, with R representing a divalent hydrocarbon group.

9. A powder of spherical particles of crosslinkable polyamide (I) according to claim 7 or claim 8, **characterized in that** the crosslinking agent (III) is such that a = 0, R1 is a divalent hydrocarbon group, preferably a propylene group, R2 is an alkoxy group, preferably methoxy or ethoxy, and Rg is an epoxy group, and preferably a glycidoxy group.

10. A powder of spherical particles of crosslinkable polyamide (I) according to any one of claims 1 to 9, **characterized in that** the crosslinkable polyamide (I) has a proportion of crosslinking functions Rt in the range 0.3% to 9% by weight, preferably 1% to 5% by weight, relative to the total weight of crosslinkable polyamide.

11. A process for the preparation of a powder of particles of crosslinkable polyamide (I) according to any one of claims 1 to 10, **characterized in that** it comprises the following steps:
a) providing a powder of spherical particles of a polyamide (II), said particles having a mean diameter d50, by volume measured with the dry laser granulometry technique, in the range 20 µm to 100 µm;
b) providing a crosslinking agent (III) comprising both at least one crosslinking function Rt selected from alkoxysilane, chlorosilane and acyloxysilane groups and, also, at least one grafting function Rg that is capable of reacting with the amine and/or carboxyl and/or amide functions of the polyamide (II), termed reactive functions Rr;
c) mixing the powder of spherical particles of polyamide (II) with the crosslinking agent (III) in order to obtain a mixture (II+III);
d) heating the mixture (II+III) obtained from step c) to a temperature T1 that is in the range from the glass transition temperature of the polyamide (II) Tg_{(II)} + 5°C to the glass transition temperature of the polyamide (II) Tg_{(II)} + 70°C if
Tg_{(II)} + 70°C ≤Tcryst_{(II)} - 35°C, or in the range from Tg_{(II)} + 5°C to the crystallization temperature of the polyamide (II) Tcryst_{(II)} - 35°C if Tg_{(II)} + 70°C > Tcryst_{(II)} - 35°C, in order to obtain a powder of spherical particles of polyamide impregnated with crosslinking agent (IV); and
e) heating the polyamide powder impregnated with crosslinking agent (IV) to a temperature T2 that is higher than T1 and lower than the crystallization temperature Tcryst_{(II)} of the polyamide (II), in order to obtain a powder of crosslinkable polyamide (I).

12. A process for the preparation of a powder of spherical particles of crosslinkable polyamide (I) according to claim 11, **characterized in that** the crosslinking agent (III) has the following formula:
Rg-R1-Si(R2)₃-a(R3)a (III)
in which:
• a = 0, 1, or 2;
• Rg is a grafting function that is capable of reacting with the reactive functions Rr of the polyamide (II);
• R1 is a divalent hydrocarbon group or a covalent bond connecting Si directly to Rg;
• R2 is an alkoxy or acyl group or a halogen, the groups R2 being identical or different when a = 0 or 1;
• R3 is an alkyl group, preferably a C1-C6 alkyl group, the groups R3 being identical or different when a = 2.

13. A process for the preparation of a powder of spherical particles of crosslinkable polyamide (I) according to claim 11 or claim 12, **characterized in that** the mixture in step c) is produced with a proportion of crosslinking agent (III) in the range 1% to 10% by weight, preferably 3% to 8% by weight, and even more preferably 4% to 6% by weight, relative to the total weight of crosslinking agent (III) and of polyamide (II).

14. A process for the preparation of a powder of spherical particles of crosslinkable polyamide (I) according to any one of claims 11 to 13, **characterized in that** it comprises a step f) subsequent to step e) for adding a flow agent, a reinforcing filler, a flame retardant, a thermal stabilizer, an antistatic or conductive agent, or a colorant.

15. Use of a powder of spherical particles of crosslinkable polyamide (I) according to any one of claims 1 to 10, for the preparation of intermediate articles by the selective laser sintering technique.

16. A process for the preparation of an intermediate article from a powder of spherical particles of crosslinkable polyamide (I) according to any one of claims 1 to 10, using the selective laser sintering technique.

17. A process for the preparation of an article, comprising:
i). forming an intermediate article using the selective laser sintering technique, starting from a powder of spherical particles of crosslinkable polyamide (I) according to the process of claim 16; and
ii). crosslinking at least a portion of the crosslinkable functions Rt of said crosslinkable polyamide (I) of the intermediate article.

18. A process according to claim 17, **characterized in that** the crosslinking is carried out by hydrolysis, in particular in ambient air.
